# EUROPEAN PATENT SPECIFICATION

(11) **EP 3 190 519 B1**
(45) Date of publication and mention of the grant of the patent: **06.04.2022**
(21) Application number: 15838997.3
(22) Date of filing: 02.09.2015
(51) Int. Cl.: G06F 11/34, G05B 23/02

(54) **MONITORING DEVICE AND MONITORING METHOD THEREOF, MONITORING SYSTEM, AND RECORDING MEDIUM IN WHICH COMPUTER PROGRAM IS STORED**
ÜBERWACHUNGSVORRICHTUNG UND ÜBERWACHUNGSVERFAHREN DAFÜR, ÜBERWACHUNGSSYSTEM UND AUFZEICHNUNGSMEDIUM MIT DARAUF GESPEICHERTEM COMPUTERPROGRAMM
DISPOSITIF DE SURVEILLANCE ET PROCÉDÉ DE SURVEILLANCE ASSOCIÉ, SYSTÈME DE SURVEILLANCE, ET SUPPORT D'ENREGISTREMENT DANS LEQUEL UN PROGRAMME INFORMATIQUE EST STOCKÉ

(30) Priority: 03.09.2014 JP 2014179042
(43) Date of publication of application: 12.07.2017
(73) Proprietor: NEC Corporation, Tokyo 108-8001 (JP)
(72) Inventor: YOSHINAGA, Naoki, Tokyo 108-8001 (JP); NATSUMEDA, Masanao, Tokyo 108-8001 (JP)
(74) Representative: Vossius & Partner Patentanwälte Rechtsanwälte mbB
(86) International application number: PCT/JP2015/004464
(87) International publication number: WO 2016/035338

(56) References cited:
- EP-A1- 2 284 769
- WO-A1-2011/046228
- WO-A1-2012/029500
- US-A1- 2004 002 776
- US-A1- 2004 006 398
- US-A1- 2006 074 598
- US-A1- 2008 167 839
- None

## Description

### [Technical Field]

The present invention relates, for example, to a technical field of monitoring an object to be monitored such as a plant or a facility. More particularly, the present invention relates to a technical field of monitoring the state of a system using a model.

### [Background Art]

In recent years, systems which provide information communication services such as Web services and systems such as plants and power generation facilities require recovery from occurring failures. These systems require not only the recovery but also detecting the symptoms of the failures. These systems are known to operate by, for example, complex cooperation among a plurality of different components. For the sake of convenience, the system which operates by complex cooperation among the components will be simply referred to as a "complex system" hereinafter in the present application.

PTL 1, for example, discloses a technique related to a facility state monitoring device which detects an anomaly of a system on the basis of time-series information output from the system. The facility state monitoring device detects an anomaly of the system using a monitoring model learned on the basis of information representing the state in which the system operates normally.

More specifically, the facility state monitoring device assigns an operation pattern label to time-series information representing the state of the system, for each predetermined period. In monitoring the system, the facility state monitoring device collects the information assigned with the operation pattern label identical to or close in state to the operation pattern label to be monitored. The facility state monitoring device sets the collected information as learning data. Thus, in monitoring the system which operates by complex cooperation according to ON-and-OFF patterns, the technique disclosed in PTL 1 can prevent false alarm which may determine that the system is in an abnormal state, although it is actually in a normal state. That is, the technique disclosed in PTL 1 can reduce false alarm even when the state of the system to be monitored is different from the state of the system indicated by the learning data.

PTL 2 discloses an exemplary operational management system which performs correlation analysis of time-series performance information (to be referred to as "time-series information" hereinafter in the present application) related to the target system. Upon correlation analysis, the operational management system determines a cause of a failure, an anomaly, or the like of the target system. That is, the operational management system models the target system when, for example, two pieces of time-series information have a correlation. The operational management system determines the cause using the generated model.

More specifically, the operational management system determines a correlation function representing the correlation of a set of a plurality of metrics, for each set of metrics, on the basis of time-series actual measured values for the metrics obtained during the period (learning period) in which the target system operates normally. The operational management system selects a correlation on the basis of information representing the weight (to be referred to as "weight information" hereinafter in the present application) obtained on the basis of the error of the determined correlation function. The operational management system thus generates a correlation model for the target system. The operational management system detects that the correlation between the sets fails to be maintained (to be also referred to as a "broken" or a "broken correlation" hereinafter in the present application), using the generated correlation model. The operational management system determines the failure factor of the target system on the basis of the detected broken correlation.

A technique for analyzing the state of the system on the basis of a broken correlation in this manner is called invariant relationship analysis. A method which uses the invariant relationship analysis will be described below by taking a pair of metrics y and u as an example. The method uses a correlation function for predicting the value of the metric y on the basis of the value of the metric u. The method compares the actual measured value of the metric y with the predicted value obtained using the correlation function. With this operation, the method calculates a tolerable prediction error based on the difference (to be referred to as the "prediction error" hereinafter in the present application) between the obtained actual measured value and the predicted value. The method sets the calculated prediction error as a threshold. The method determines whether the obtained prediction error is larger than the threshold. The method determines that the correlation between the metrics y and u has been broken when it is determined that the obtained prediction error is larger than the threshold. The method can therefore detect an anomaly occurring in the system.

US 2004/0006398 A1 relates to generally to a system and method for process parameter estimation using operating mode partitioning and, in particular, to a system and method for performing high sensitivity surveillance of an asset such as a process and/or apparatus preferably having at least two distinct modes of operation wherein surveillance is performed using an operating mode partitioned parameter estimation model of the asset.

US 2004/002776 A1 relates to a system and method for performing high sensitivity surveillance of an asset such as a process and/or apparatus preferably having at least two distinct modes of operation wherein surveillance is performed using an operating mode partitioned fault classification model of the asset

US 2006/074598 A1 relates to a method for detecting an abnormal event for process units of a hydrocracking unit. The method compares the operation of the process units to a model developed by principle components analysis of normal operation for these units. If the difference between the operation of a process unit and the normal operation indicates an abnormal condition, then the cause of the abnormal condition is determined and corrected

US 2008/167839 A1 relates to process control systems and, more particularly, to systems for monitoring and/or modeling processes.

### [Citation List]

### [Patent Literature]

[PTL 1] International Publication No. WO 2013/030984
[PTL 2] Japanese Unexamined Patent Application Publication No. 2009-199533

### [Summary of Invention]

### [Technical Problem]

In the facility state monitoring device disclosed in PTL 1, the condition under which operation pattern labels are assigned needs to be set externally. For this reason, the operation pattern label and the state of the system may not match each other. That is, the facility state monitoring device may be less effective in reducing false alarm. Especially in the complex system, the states of a plurality of subsystems constituting the system exist for each subsystem. The state of the entire system is determined by a set of states of the subsystems. In PTL 1, therefore, the above-mentioned condition needs to be set to cover all sets of a large number of such states. However, in the facility state monitoring device, it is very difficult to set the above-mentioned condition when the system is complex and includes a plurality of subsystems.

It is the main object of the present invention to provide a monitoring device and the like which exhibit high capability of detecting a state related to a system and can reduce erroneous detection even when the system allows a plurality of objects to be monitored to complexly cooperate with each other.

### [Solution to Problem]

In order to achieve the above-described object, a monitoring device according to an aspect of the present invention includes the following configuration.

That is, a monitoring device according to an aspect of the present invention is defined in claim 1.

The above-described object is also achieved by a monitoring system including the above-mentioned monitoring device.

In order to achieve the above-described object, a computer-implemented monitoring method according to an aspect of the present invention includes the following configuration.

That is, a monitoring method according to an aspect of the present invention includes:
dividing time-series information from among pieces of time-series information obtained by associating pieces of information of a plurality of items related to an object to be monitored on a time-series basis over a predetermined period, the time-series information associated with each item to be modeled, into pieces of divided information of periods, each period shorter than the predetermined period, and generating models representing correlations related to the pieces of divided information; and
by applying another time-series information obtained by associating the pieces of information of the plurality of items on a time-series basis during a period different from the predetermined period, to at least two or more of the models related to the each item, for each of the two or more of the models, determining whether the correlation represented by at least one or more of the models is maintained, and performing a determination related to the each item based on results of the determining,
   wherein the method further comprises:
dividing the time-series information associated with the each item, on the basis of a plurality of division conditions,
generating the models related to the pieces of divided time-series information,
obtaining a total amount of change in parameters between the generated models related to pieces of divided time-series information,
combining the pieces of divided time-series information, for which the obtained total amount of change in parameters satisfies a predetermined condition, and
   regenerating models related to the combined pieces of divided time-series information.

The above-described object is even achieved by a computer program for causing a computer to implement a monitoring device and a monitoring method including the above-mentioned respective configurations, and a computer-readable recording medium in which the computer program is stored.

### [Advantageous Effects of Invention]

The present invention can provide a monitoring device and the like which exhibit high capability of detecting a state related to a system and can reduce erroneous detection even when the system allows a plurality of objects to be monitored to complexly cooperate with each other.

### [Brief Description of Drawings]

[Fig. 1] Fig. 1 is a block diagram illustrating the configuration of a monitoring device in a first example embodiment of the present invention.
[Fig. 2] Fig. 2 is a block diagram illustrating the configuration of a monitoring device in a second example embodiment of the present invention.
[Fig. 3] Fig. 3 is a table illustrating a specific example of a plurality of items and time-series information associated with the items in the second example embodiment of the present invention.
[Fig. 4] Fig. 4 is a graph conceptually illustrating the mode in which information is presented to a display unit by a first determination unit in the second example embodiment of the present invention.
[Fig. 5] Fig. 5 is a block diagram illustrating the configuration of a monitoring system including a monitoring device in a third example embodiment of the present invention.
[Fig. 6] Fig. 6 is a flowchart illustrating an operation by the monitoring device in the third example embodiment of the present invention.
[Fig. 7] Fig. 7 is a table conceptually illustrating the mode in which time-series information is stored in performance information in the third example embodiment of the present invention.
[Fig. 8] Fig. 8 is a graph illustrating the time-series information in the third example embodiment of the present invention.
[Fig. 9] Fig. 9 is a flowchart illustrating an operation for generating a correlation model by the monitoring device in the third example embodiment of the present invention.
[Fig. 10] Fig. 10 is a diagram illustrating a specific example of time-series information divided by a first division unit in the third example embodiment of the present invention.
[Fig. 11] Fig. 11 is a table illustrating a specific example of a correlation model generated by a second model generation unit in the third example embodiment of the present invention.
[Fig. 12] Fig. 12 is a flowchart illustrating an operation for analyzing changes in correlation by the monitoring device in the third example embodiment of the present invention.
[Fig. 13] Fig. 13 is a table illustrating a specific example of time-series information obtained during a period different from the learning period in the third example embodiment of the present invention.
[Fig. 14] Fig. 14 is a graph illustrating the time-series information obtained during the period different from the learning period in the third example embodiment of the present invention.
[Fig. 15] Fig. 15 is a table illustrating a specific example of the result of analyzing the correlation between each correlation model and the time-series information by a correlation analysis unit in the third example embodiment of the present invention.
[Fig. 16] Fig. 16 is a table illustrating a specific example of the result of determining the correlation between each correlation model and the time-series information by a second determination unit in the third example embodiment of the present invention.
[Fig. 17] Fig. 17 is a block diagram illustrating the configuration of a monitoring system including a monitoring device in a fourth example embodiment of the present invention.
[Fig. 18] Fig. 18 is a diagram illustrating a specific example of time-series information divided by a second division unit in the fourth example embodiment of the present invention.
[Fig. 19] Fig. 19 is a table illustrating a specific example of a correlation model generated by a second model generation unit in the fourth example embodiment of the present invention.
[Fig. 20] Fig. 20 is a table illustrating a specific example of the difference between parameters obtained by a model determination unit in the fourth example embodiment of the present invention.
[Fig. 21] Fig. 21 is a diagram illustrating a specific example of time-series information combined by the second division unit in the fourth example embodiment of the present invention.
[Fig. 22] Fig. 22 is a table illustrating a specific example of a correlation model regenerated by the second model generation unit in the fourth example embodiment of the present invention.
[Fig. 23] Fig. 23 is a table illustrating a specific example of the difference between parameters obtained by the model determination unit in the fourth example embodiment of the present invention.
[Fig. 24] Fig. 24 is a table illustrating a specific example of a value related to the slope obtained by the second division unit in the fourth example embodiment of the present invention.
[Fig. 25] Fig. 25 is a graph conceptually illustrating the mode in which second time-series information is divided by the second division unit in the fourth example embodiment of the present invention.
[Fig. 26] Fig. 26 is a block diagram for explaining an exemplary hardware configuration of an information processing device which can implement each example embodiment according to the present invention.
[Fig. 27] Fig. 27 is a flowchart illustrating determination processing related to each item by the monitoring device in the second example embodiment of the present invention.
[Fig. 28] Fig. 28 is a flowchart illustrating an operation for determining whether to regenerate a correlation model by the model determination unit in the fourth example embodiment of the present invention.

### [Description of Embodiments]

Example embodiments of the present invention will be described in detail below with reference to the drawings. The directions pointed by arrows in the drawings are merely illustrative and do not limit the directions of signals passed between blocks (the same applies to the subsequent example embodiments).

### <First Example Embodiment>

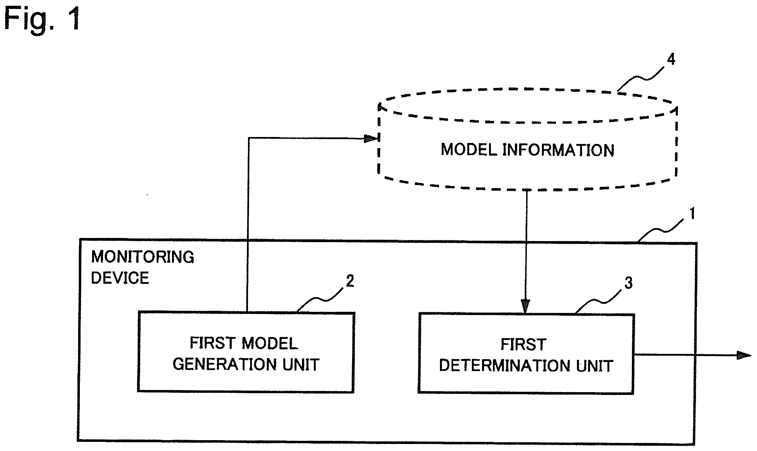

Fig. 1 is a block diagram illustrating the configuration of a monitoring device 1 in a first example embodiment of the present invention.

Referring to Fig. 1, the monitoring device 1 includes a first model generation unit 2 and a first determination unit 3.

The first model generation unit 2 performs division process based on time-series information (first time-series information) obtained by associating pieces of information of a plurality of items related to an object to be monitored on a time-series basis over a predetermined period (learning period). That is, the first model generation unit 2 divides time-series information (second time-series information) associated with each item to be modeled of the first time-series information into pieces of divided information of periods, each period shorter than the predetermined period. The first model generation unit 2, for example, divides the second time-series information into pieces of divided information of periods shorter than the predetermined period in response to changes in state related to each item. The first model generation unit 2 generates models representing correlations related to the pieces of the divided information.

Examples of the object to be monitored include a system which outputs time-series information including, for example, at least information concerning the performance or environment of the system. According to the invention, the object to be monitored is a system such as a plant or a power generation facility. As another example, the object to be monitored is a system for a road, a bridge pier, a building, and the like. As still another example, the object to be monitored is a system which detects symptoms of landslide and earthquake disasters. However, the present invention to be described hereinafter by taking the present example embodiment as an example is not limited to the above-mentioned configuration (the same applies to the subsequent example embodiments).

The pieces of time-series information (pieces of first and second time-series information) include, for example, at least one of measurement information representing the measured values and performance information which constantly changes in relation to various items obtained for each predetermined time interval (for example, every minute). More specifically, as an example, the performance information includes information representing the utilization ratio of each item such as a CPU (Central Processing Unit), a memory, or a hard disk. The measurement information includes, for example, information representing the values measured by various sensors (each item) such as a temperature sensor, a pressure sensor, and a vibration sensor. Alternatively, the measurement information includes information representing the measured values observed not only by sensors but also by, for example, measuring instruments such as electric meters.

For the sake of convenience, as an example, the predetermined period in which the object to be monitored operates normally will be referred to as the "learning period" hereinafter (the same applies to the subsequent example embodiments).

The first determination unit 3 performs analysis process based on another time-series information (third time-series information) and at least one or more of the models related to each item generated by the first model generation unit 2. The third time-series information is obtained by associating pieces of information related to a plurality of items on a time-series basis during a period different from the predetermined period.

More specifically, the first determination unit 3 applies third time-series information to at least two or more of the models related to each item, for each of the two or more of the models. That is, the first determination unit 3 performs the following process for each of at least two or more of the models related to each item generated by the first model generation unit 2. That is, the first determination unit 3 applies third time-series information to individual models constituting the group of these at least two or more of the models. The first determination unit 3 thus determines whether the correlation represented by at least one or more of the models is maintained. The first determination unit 3 performs a determination related to each item based on results of the former determination. That is, the first determination unit 3 performs the determination related to each item, on the basis of at least one of the results. Exemplary analysis process by the first determination unit 3 will be described in detail later in the second and third example embodiments.

The time-series information (third time-series information) during a period different from the learning period is obtained during the period in which, for example, changes in correlation are analyzed (to be referred-to as the "analysis period" hereinafter). The time-series information includes at least one of measurement information and performance information which constantly changes in relation to various items. The analysis period is after the learning period. Alternatively, the analysis period may be before the learning period.

In the above-described present example embodiment, for the sake of convenience, as an example, the third time-series information is obtained by associating pieces of information of a plurality of items on a time-series basis during the period different from the learning period. However, example embodiments according to the present invention are not limited to this configuration. The third time-series information may be pieces of information of a plurality of items at a time instant different from the learning period.

In this manner, the monitoring device 1 according to the present example embodiment exhibits high capability of detecting a state related to the system and can reduce erroneous detection even when the system allows a plurality of objects to be monitored to complexly cooperate with each other. The reason will be given below.

That is, the monitoring device 1 includes the first model generation unit 2 and the first determination unit 3. The first model generation unit 2 divides second time-series information so as not to include a plurality of states related to each item even when the second time-series information includes the plurality of states. The first model generation unit 2 can generate the model related to the pieces of divided second time-series information. The first determination unit 3 determines whether the correlation represented by the generated model is maintained, on the basis of third time-series information and this model. The first determination unit 3 can perform determination related to each item based on results of the former determination. The monitoring device 1 can perform determination related to each of a plurality of items, using each item as a target. The monitoring device 1 can thus perform determination related to an object to be monitored.

More specifically, for example, the system to be monitored is known to have a plurality of states (normal states) in which the system operates normally, depending on the operation conditions of the system. In a model learned in a specific normal state of the normal states, normal states other than the specific normal state may be detected to be abnormal. In addition, in a model learned during the learning period including the plurality of states, it may be determined that the normal state is set, although an anomaly has actually occurred. However, the monitoring device 1 can divide second time-series information in response to changes in state related to each item. The monitoring device 1 can monitor the object to be monitored using the learned model, for the pieces of divided second time-series information. The monitoring device 1 exhibits high capability of detecting an anomaly and can reduce erroneous detection even when the second time-series information includes a plurality of such states. The monitoring device 1 can therefore reduce false alarm.

### <Second Example Embodiment>

A second example embodiment based on the monitoring device 1 according to the first example embodiment of the present invention described above will be described next. Features according to the present example embodiment will be mainly described hereinafter. The same reference numerals denote the same configurations as in the above-described example embodiment, and a repetitive description thereof will not be given.

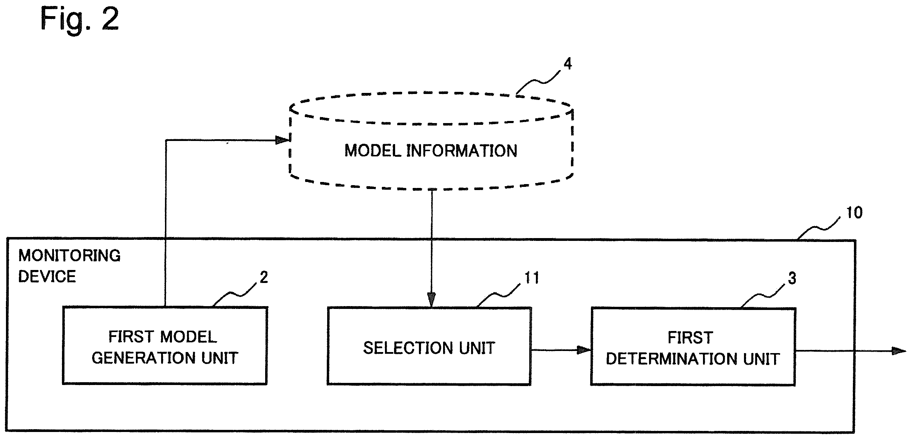

Fig. 2 is a block diagram illustrating the configuration of a monitoring device 10 in a second example embodiment of the present invention.

Referring to Fig. 2, the monitoring device 10 includes the first model generation unit 2, a selection unit 11, and the first determination unit 3.

For the sake of convenience, as an example, process for each item including at least two or more items of interest of a plurality of items representing the configuration of the object to be monitored will be described below (the same applies to the subsequent example embodiments).

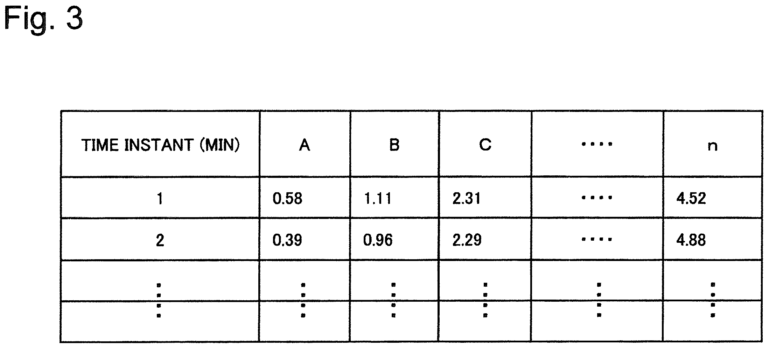

In order to foster a better understanding, each item including two items having a correlation of a plurality of items illustrated in Fig. 3 will be taken as an example hereinafter. Examples of each item include each item including items A and B, each item including items A and C,..., each item including items C and n. In particular, for the sake of convenience, each item including items A and B will be taken as an example hereinafter.

Fig. 3 is a table illustrating a specific example of a plurality of items and time-series information associated with the items in the second example embodiment of the present invention. Referring to Fig. 3, the first column describes information representing time including the time instant (for example, in minutes) at which the performance value is measured. The second and subsequent columns describe pieces of information representing the performance values related to a plurality of items (items A, B, C,..., n).

For the sake of convenience, the above-mentioned configuration will be taken as an example, but the present invention to be described by taking the present example embodiment as an example is not limited to the above-mentioned configuration (the same applies to the subsequent example embodiments).

The first model generation unit 2 performs division process based on time-series information (first time-series information). The first time-series information is obtained by associating pieces of information related to a plurality of items representing the configuration of the object to be monitored (for example, a physical object) on a time-series basis over a predetermined period. That is, the first model generation unit 2 performs division process for time-series information (second time-series information) associated with each item including at least two or more items of interest of the first time-series information.

For the sake of convenience, each item including at least two or more items of interest will be simply referred to as "each item" hereinafter (the same applies to the subsequent example embodiments).

The division process by the first model generation unit 2 will be described more specifically below.

The first model generation unit 2 divides second time-series information associated with each item including at least two or more items of interest of the first time-series information. That is, the first model generation unit 2 divides the second time-series information into pieces of divided information of periods shorter than the learning period in response to changes in state related to each of the above-mentioned items. In this case, the first model generation unit 2 divides the second time-series information so that at least one or more pieces of divided second time-series information includes no plurality of such states. The first model generation unit 2 further performs division process for at least one or more item of each item of a plurality of items representing the configuration of the object to be monitored.

As a division method, the first model generation unit 2 may, for example, divide second time-series information during a predetermined period.

More specifically, the first model generation unit 2 may, for example, divide second time-series information obtained during the learning period of one week into periods of one hour or one day each. Upon division of the second time-series information over a period having an appropriate length, the pieces of divided second time-series information becomes less likely to include a plurality of states related to each item.

As another division method, the first model generation unit 2 may use, for example, a configuration which divides second time-series information at the division boundaries (for example, the points of change) where the value (for example, the performance value) included in the second time-series information changes considerably.

More specifically, the first model generation unit 2, for example, obtains the absolute value of the second-order derivative of the value (for example, the performance value related to the item) included in the second time-series information. The first model generation unit 2 may divide the second time-series information at the points at which the obtained absolute value is equal to or larger than a predetermined reference (reference value or threshold). That is, when the obtained absolute value satisfies a predetermined reference (first reference), the first model generation unit 2 may divide the second time-series information on the basis of the performance value related to the item (details will be described later in the fourth example embodiment).

As the third division method, the first model generation unit 2 may use, for example, a configuration which divides second time-series information in accordance with the amount of change between models (for example, correlation models). In this case, the first model generation unit 2 divides the second time-series information on the basis of a plurality of division conditions (that is, possible division conditions). The first model generation unit 2 generates the models related to the pieces of divided second time-series information. The first model generation unit 2 then obtains a total amount of change based on the amount of change between at least one or more generated models. The first model generation unit 2 specifies a division condition under which the total amount of change is largest of the total amounts of change obtained for various division conditions, respectively. The first model generation unit 2 may divide second time-series information in accordance with the specified division condition.

As the fourth division method, the first model generation unit 2 may use, for example, a configuration which divides second time-series information at a time interval smaller than that at which the state related to each item changes. Alternatively, the first model generation unit 2 may use, for example, a configuration which divides the second time-series information on the basis of a predetermined number. The first model generation unit 2 may even use, for example, a configuration which divides the second time-series information on the basis of a division condition set by the administrator or the user.

For the sake of convenience, the first model generation unit 2 has been described in the above-described present example embodiment by taking as an example, a configuration which divides second time-series information into the each period shorter than the learning period in response to changes in state related to each item including at least two or more items of interest. However, example embodiments according to the present invention are not limited to this configuration. The first model generation unit 2 may use a configuration which divides second time-series information into the pieces of divided information of periods shorter than the learning period in response to changes in state related to the object to be monitored. In this case, the first model generation unit 2 may, for example, divide the second time-series information in response to changes in state such as changes in load or operation condition of the object to be monitored.

The first model generation unit 2 outputs correlativity that holds in each piece of divided second time-series information as the model. An example of the model is a correlation model. The first model generation unit 2 obtains the correlation between pieces of time-series information and information (to be referred to as "weight information" hereinafter) representing the weight (to be described later), for each piece of divided second time-series information. In the present example embodiment, the correlation is represented by a transform function (or the correlation function) between pieces of time-series information.

The first model generation unit 2 derives the transform function between pieces of time-series information when the value of one piece of time-series information is used as input and the value of the other piece of time-series information is used as output, for each of at least one or more the pieces of divided second time-series information. The first model generation unit 2 obtains a parameter for the transform function on the basis of at least one or more the pieces of divided second time-series information. The parameter may use, for example, a configuration determined by system identification process for each piece of divided second time-series information, as in PTL 2.

The first model generation unit 2 derives the transform function related to each item including at least two or more items representing the configuration of the object to be monitored, by repeating the above-mentioned process for all of these items. The first model generation unit 2 can thus generate the models representing the overall state related to the object to be monitored. The first model generation unit 2 can derive the transform function related to each item including any item by sequentially performing such exhaustive transform function derivation for at least one or more the pieces of divided second time-series information.

The first model generation unit 2 applies weight information to the model. The weight information represents reliability, accuracy, significance, or the like in the transform function. The weight information may use a configuration obtained on the basis of a prediction error (second prediction error) for second time-series information according to a transform function (the prediction error will be described later in the present example embodiment), as in PTL 2.

The first model generation unit 2 associates identification information capable of identifying second time-series information to be divided and at least one or more the pieces of divided second time-series information, a generated model, and weight information for the model, and stores them in model information 4.

In this manner, the first model generation unit 2 can generate the models related to each piece of divided second time-series information for each piece of divided second time-series information. As a result, the first model generation unit 2 can reflect the relationship between items constituting each item in response to changes in state related to each item even when the second time-series information includes a plurality of such states.

The first model generation unit 2 may use, for example, a configuration which determines that the accuracy of the transform function is low when it is determined that the transform function does not satisfy a predetermined reference (second reference) (for example, the prediction error is larger than a reference value). In this case, the first model generation unit 2 may avoid using a low-accuracy transform function as the model.

For the sake of convenience, the first model generation unit 2 has been described in the above-described present example embodiment by taking as an example, a configuration which uses the correlation model as the model. However, example embodiments according to the present invention are not limited to this configuration. The first model generation unit 2 may use, for example, the model based on a method well known in the field of statistical processing. More specifically, the first model generation unit 2 may use, for example, a probability model as the model.

The model information 4 stores information obtained by associating identification information obtained from the first model generation unit 2, the generated model, and weight information for the model.

The selection unit 11 selects the following information of second time-series information associated with each item including at least one or more item on the basis of the characteristics of the model related to each item including at least one or more item. That is, the selection unit 11 selects second time-series information associated with specific each item used for monitoring and at least one or more of the models related to specific each item. The selection unit 11 provides the first determination unit 3 with the selected second time-series information associated with specific each item and at least one or more of the models related to specific each item.

Process for selecting second time-series information and the model by the selection unit 11 will be described more specifically as an example below.

The selection unit 11 determines whether the weight information related to each item satisfies a predetermined condition (first condition).

When the selection unit 11 determines that the above-mentioned weight information satisfies the predetermined condition, it selects second time-series information related to the model as second time-series information associated with specific each item. In this case, the selection unit 11, for example, determines whether weight information exhibiting the largest value of weight information for at least one or more of the models generated by the first model generation unit 2 satisfies the predetermined condition. The selection unit 11 may thus use a configuration which selects second time-series information associated with specific each item. That is, the selection unit 11 selects second time-series information associated with specific each item, for which the weight information for at least one or more generated model satisfies the predetermined condition, from pieces of time-series information (second time-series information) each associated with each item. The selection unit 11 then selects all models related to the selected second time-series information. That is, the selection unit 11 selects at least one or more of the models related to specific each item (the selection process of the selection unit 11 will be described in detail later in the third example embodiment).

The first determination unit 3 performs analysis process based on at least one or more of the models related to specific each item selected by the selection unit 11, and another time-series information (third time-series information) obtained by associating pieces of information of a plurality of items on a time-series basis during a period different from the learning period. That is, the first determination unit 3 applies third time-series information to at least one or more selected model. In other words, the first determination unit 3 applies the third time-series information to each of at least two or more of the models related to specific each item, for each of the two or more of the models. The first determination unit 3 thus determines whether the correlation represented by at least one or more of the models is maintained (relationship). The first determination unit 3 further performs determination related to specific each item based on results of the former determination.

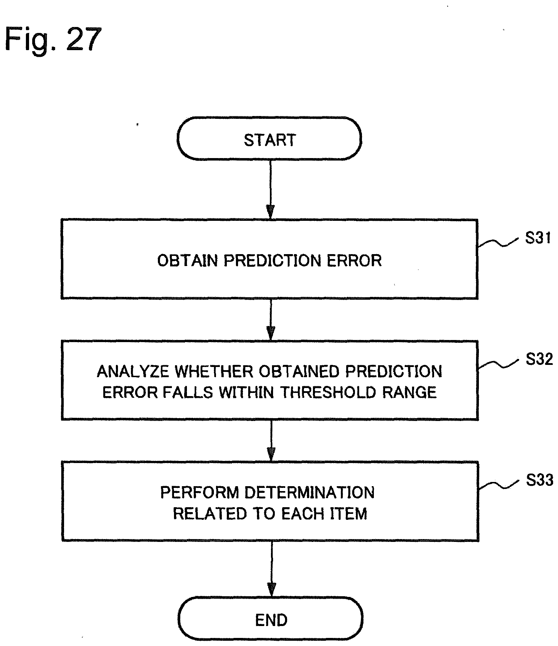

Process for performing determination related to each item by the first determination unit 3 will be described more specifically as an example below with reference to Fig. 27. Fig. 27 is a flowchart illustrating determination process related to each item by the monitoring device 10 in the second example embodiment of the present invention.

For the sake of convenience, the use of a correlation model as the model will be described in detail as an example below (the same applies to the subsequent example embodiments).

The first determination unit 3, for example, analyzes (determines) whether the correlation between the value included in newly obtained third time-series information and at least one or more selected correlation model satisfies the range defined by a predetermined error threshold. In the following description, that the range defined by the error threshold is satisfied means that the range defined by the tolerable error threshold is satisfied. That the range defined by the error threshold is not satisfied means a departure from the range defined by the tolerable error threshold (the same applies to the subsequent example embodiments).

More specifically, on the basis of newly obtained third time-series information and all correlation models selected by the selection unit 11, the first determination unit 3 obtains the error between the value included in the third time-series information and the predicted value (step S31). The error between the value included in the third time-series information and the predicted value will be referred to as a "prediction error (first prediction error)" or a "transform error" hereinafter in the present application.

The first determination unit 3, for example, obtains the predicted value related to a given item of each item on the basis of the value (performance value) related to a different item of each item and the transform function represented by the correlation model. The first determination unit 3 further obtains the prediction error between the performance value related to the given item and the obtained predicted value. In this manner, the first determination unit 3 obtains the prediction error for each of at least one or more correlation model selected by the selection unit 11.

The first determination unit 3 analyzes whether the prediction error satisfies the range defined by the predetermined error threshold, for each obtained prediction error (step S32). The first determination unit 3 integrates pieces of information representing the analysis results to perform determination related to specific each item. That is, the first determination unit 3 determines whether the correlation between pieces of time-series information is maintained. The first determination unit 3 performs determination related to specific each item based on results of the former determination (step S33).

A method for the determination by the first determination unit 3 will be described more specifically as an example below. In the following description, for the sake of convenience, the information representing the analysis result is represented by a binary value.

In step S33, when all analysis results for at least one or more correlation model do not satisfy a predetermined error range, the first determination unit 3 determines as follows. That is, the first determination unit 3 determines that the correlation between pieces of time-series information does not satisfy a predetermined error range even for third time-series information. In other words, the first determination unit 3 determines whether all prediction errors for the third time-series information fall within the predetermined error range, for the correlation function represented by at least one or more correlation model. When all prediction errors fall outside the predetermined error range, the first determination unit 3 determines that the correlation between pieces of time-series information falls outside the predetermined error range, even for the third time-series information. The first determination unit 3 thus determines an anomaly for specific each item. That is, the first determination unit 3 determines that an anomaly has occurred for specific each item.

Other hand, when any of analysis results for at least one or more correlation model satisfies the range defined by the predetermined error threshold, the first determination unit 3 determines as follows. That is, the first determination unit 3 determines that the correlation between pieces of time-series information satisfies the range defined by the predetermined error threshold even for third time-series information. Alternatively, when all of analysis results for at least one or more correlation model satisfy the range defined by a predetermined error threshold, the first determination unit 3 may determine that the correlation between pieces of time-series information satisfies the range defined by the predetermined error threshold even for the third time-series information. That is, the first determination unit 3 determines that a normal state is maintained for specific each item.

The case where the information representing the analysis result is represented by a continuous value will be described below. The first determination unit 3 selects one of analysis results for at least one or more correlation model, the continuous value (analysis result) of which is lowest (or smallest). The first determination unit 3 may use a configuration which provides the selected lowest value as a determination result. More specifically, the first determination unit 3 may, for example, select the smallest one of obtained prediction errors.

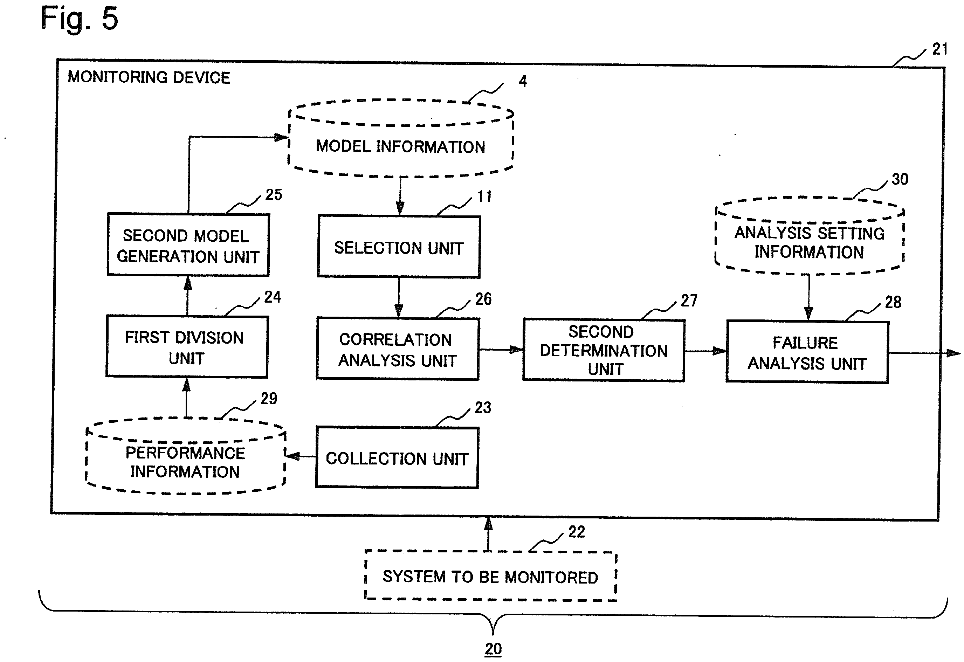

The first determination unit 3 may use, for example, a configuration which provides the determination result to an external device. More specifically, the first determination unit 3 may provide the result to, for example, a failure analysis unit 28 illustrated in Fig. 5 to be described in the third example embodiment. In this case, for example, the first determination unit 3 is assumed to be connected to the failure analysis unit 28 so that the result can be output to the failure analysis unit 28.

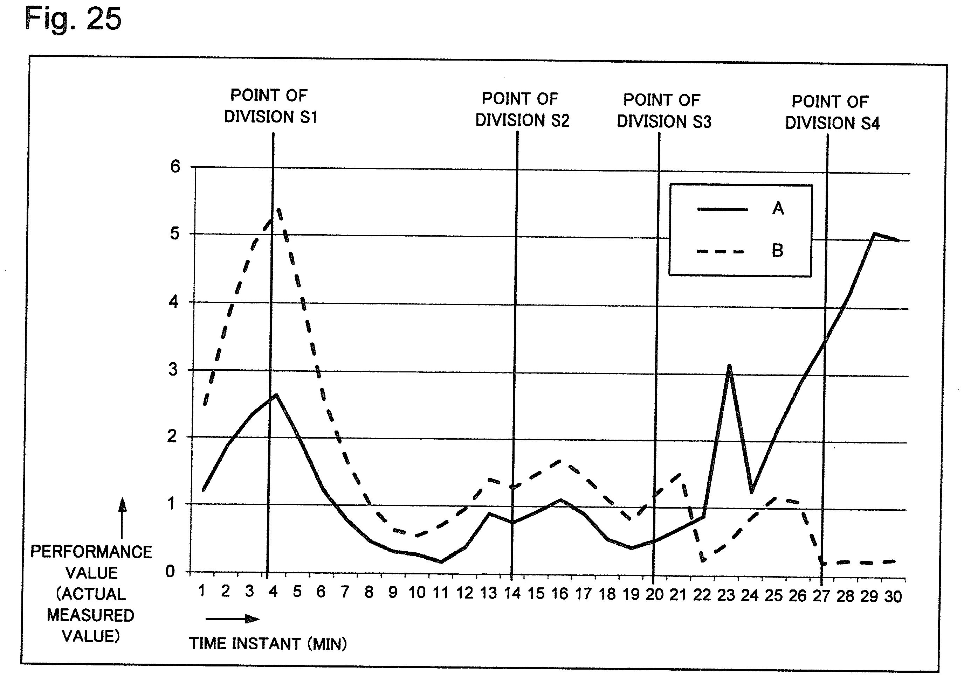

As another example, the first determination unit 3 may present the result to a display unit (not illustrated) serving as a user interface such as a display, in a mode identifiable for the user. In this case, the first determination unit 3 may present not only the result but also, for example, the following information to the display unit in a mode identifiable for the user. The information includes, for example, second time-series information as illustrated in Fig. 25 and division boundaries (points of division) in the second time-series information divided by the first model generation unit 2. Alternatively, the first determination unit 3 may present the value (performance value) included in second time-series information and the values representing division boundaries in the second time-series information divided by the first model generation unit 2 to the display unit in a mode identifiable for the user.

With this operation, the user can, for example, confirm second time-series information and division boundaries. The user can also, for example, reset division boundaries on the basis of the presented division boundaries when second time-series information is to be divided at desired division boundaries different from the presented division boundaries. In this case, the monitoring device 10 may, for example, provide an interface to enable the user to set division boundaries.

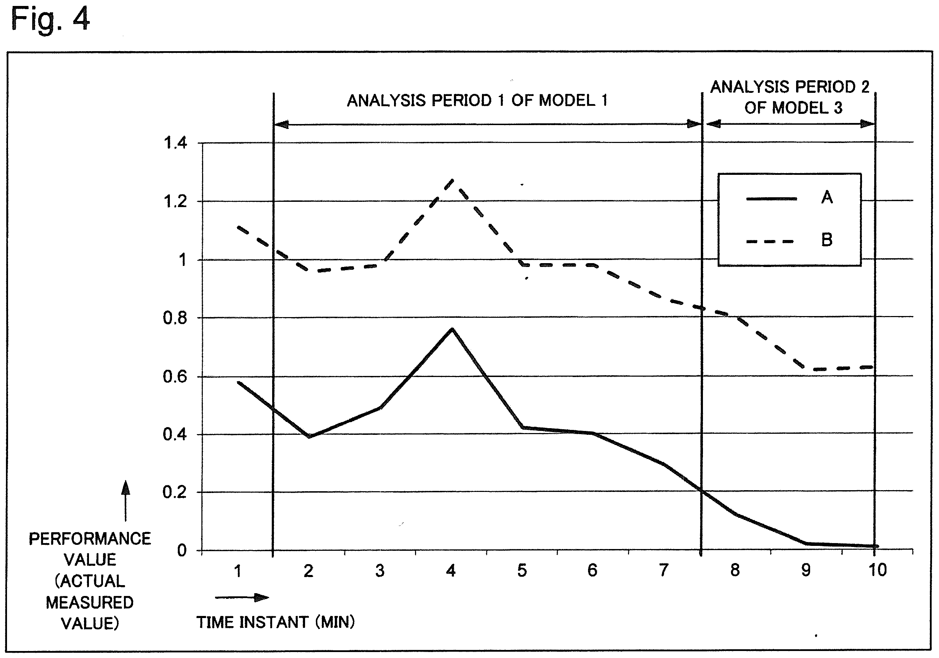

As still another example, the first determination unit 3 may, for example, present third time-series information and at least one or more result used for determination related to each item of obtained results to the display unit in a mode identifiable for the user, for each analysis period as illustrated in, for example, Fig. 4.

Fig. 4 is a graph conceptually illustrating the mode in which information is presented to the display unit by the first determination unit 3 in the second example embodiment of the present invention.

Fig. 4 is a graph representing time-series information for each item. The ordinate indicates the performance value (actual measured value). The abscissa indicates time including the time instant (min) at which the performance value is measured. Referring to Fig. 4, the graph indicated by a solid line represents time-series information for item A. The graph indicated by a dotted line represents time-series information for item B.

More specifically, Fig. 4 illustrates pieces of time-series information (third time-series information) for items A and B obtained during "analysis period 1" and "analysis period 2" that are the periods in which changes in correlation are analyzed. "Model 1" and "model 3" represent models used for determination related to each item by the first determination unit 3.

The first determination unit 3 presents third time-series information to be analyzed and the model matching the state related to each item represented by the third time-series information to the display unit in a mode identifiable for the user, for each analysis period, as illustrated in Fig. 4. For example, in "analysis period 1," the correlation between "model 1" and third time-series information satisfies the range defined by the predetermined error threshold, as illustrated in Fig. 4. That is, in "analysis period 1," the correlation between the "model 1" and the third time-series information is maintained.

With this operation, the user can, for example, easily identify a particular model which maintains a correlation with the third time-series information.

In this manner, the monitoring device 10 according to the present example embodiment can achieve the effect described in the first example embodiment, and in addition, can more rapidly, accurately detect a state related to the system. The reason will be given below.

That is, the monitoring device 10 includes the selection unit 11 which selects second time-series information related to specific each item to be monitored from pieces of second time-series information, and the model related to specific each item. As a result, the first determination unit 3 needs to perform analysis process only for at least one or more of the models related to specific each item selected by the selection unit 11.

### <Third Example Embodiment>

A third example embodiment based on the monitoring device 10 according to the second example embodiment of the present invention described above will be described next. Features according to the present example embodiment will be mainly described hereinafter. The same reference numerals denote the same configurations as in each of the above-described example embodiments, and a repetitive description thereof will not be given.

A monitoring system 20 including a monitoring device 21 in the third example embodiment of the present invention will be described below with reference to Figs. 5 to 16.

Fig. 5 is a block diagram illustrating the configuration of the monitoring system 20 including the monitoring device 21 in the third example embodiment of the present invention.

Referring to Fig. 5, the monitoring system 20 mainly includes the monitoring device 21 and a system to be monitored 22. Assume that the monitoring device 21 and the system to be monitored 22 can be communicably connected to each other via, for example, a communication network (not illustrated). The monitoring device 21 includes a collection unit 23, a first division unit 24, a second model generation unit 25, the selection unit 11, a correlation analysis unit 26, a second determination unit 27, and a failure analysis unit 28.

The system to be monitored 22 is the object to be monitored which outputs time-series information including, for example, pieces of information concerning the performance and the environment of the system described in the first example embodiment. The system to be monitored 22, for example, measures performance values related to a plurality of items representing configuration of own-device, for each predetermined time interval. The system to be monitored 22 provides time-series information obtained by associating pieces of information including these measured performance values on a time-series basis to the monitoring device 21.

For the sake of convenience, in order to foster a better understanding, the monitoring device 21 will be described hereinafter by taking as an example, a configuration which monitors one system to be monitored 22 of interest among a plurality of systems to be monitored. However, example embodiments according to the present invention are not limited to this configuration. The monitoring device 21 can use a configuration which monitors, for example, at least one or more system to be monitored in accordance with the monitoring system to be established.

The collection unit 23 collects time-series information related to each item obtained from the system to be monitored 22. The collection unit 23 stores the collected time-series information related to each item in performance information 29.

The performance information 29 includes time-series information related to each item obtained from the collection unit 23.

The first division unit 24 and the second model generation unit 25 correspond to the first model generation unit 2 described in the second example embodiment. That is, the first division unit 24 and the second model generation unit 25 share and perform the operation by the first model generation unit 2 (the operations of the first division unit 24 and the second model generation unit 25 will be described later in the present example embodiment).

The correlation analysis unit 26 and the second determination unit 27 correspond to the first determination unit 3 described in the second example embodiment. That is, the correlation analysis unit 26 and the second determination unit 27 share and perform the operation by the first determination unit 3 (the operations of the correlation analysis unit 26 and the second determination unit 27 will be described later in the present example embodiment).

Analysis setting information 30 includes information representing analysis setting designating methods and conditions for failure analysis by the failure analysis unit 28. Assume, for example, that the analysis setting includes setting of conditions such as anomaly notification (warning issuance) when time-series information which does not satisfy the predetermined error range is present, on the basis of the determination result obtained from the second determination unit 27. Alternatively, the analysis setting may include setting of conditions such as the number of broken correlations and the ratio of broken correlations.

The failure analysis unit 28 performs failure analysis of the determination result obtained from the second determination unit 27, in accordance with the analysis setting stored in the analysis setting information 30.

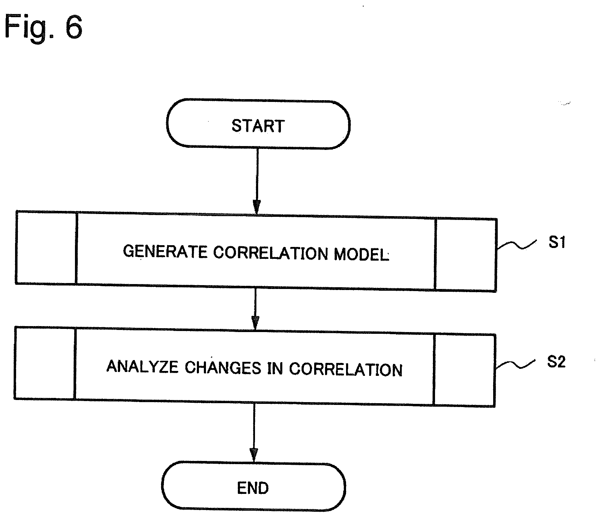

The operation of the monitoring device 21 in the present example embodiment will be described more specifically below with reference to Figs. 6 to 16.

Fig. 6 is a flowchart illustrating an operation by the monitoring device 21 in the third example embodiment of the present invention. The operation procedure of the monitoring device 21 will be described below in accordance with the flowchart.

Referring to Fig. 6, the overall operation of the monitoring device 21 is classified into process (step S1) for generating a correlation model and process (step S2) for analyzing changes in correlation.

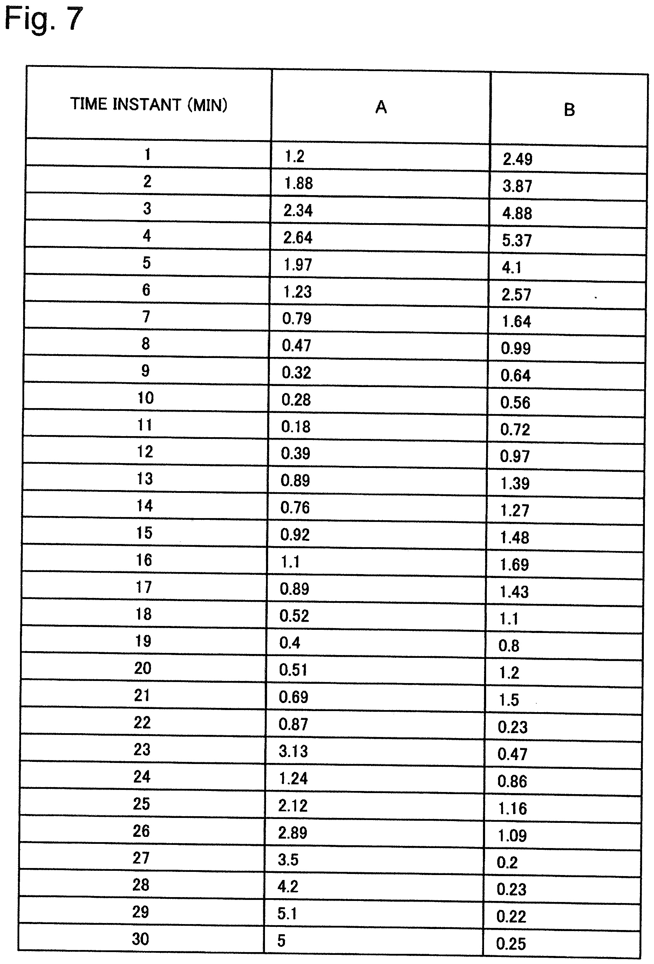

For the sake of convenience, the following description assumes, as an example, that the monitoring device 21 performs process for time-series information (second time-series information) associated with each item including two items A and B. In doing this, the collection unit 23 is assumed to collect time-series information related to items A and B from the system to be monitored 22. The collection unit 23 is assumed to, for example, store the time-series information as illustrated in Fig. 7 in the performance information 29.

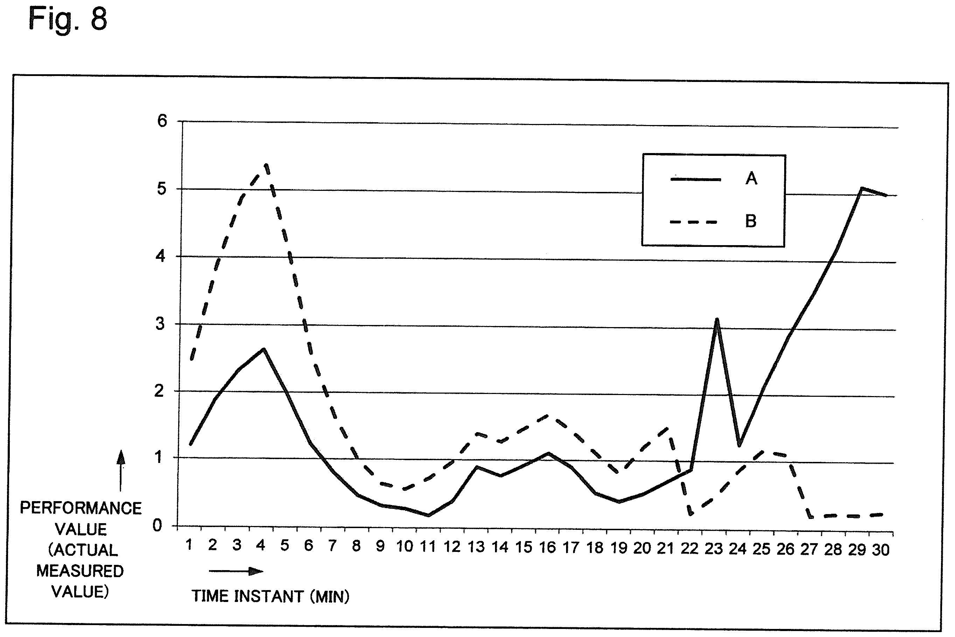

Fig. 7 is a table conceptually illustrating the mode in which time-series information is stored in the performance information 29 in the third example embodiment of the present invention. Fig. 8 is a graph illustrating the time-series information in the third example embodiment of the present invention.

Referring to Fig. 7, the first column describes information representing time including the time instant (min) at which the performance value is measured. The second column describes information representing the performance value related to item A. The third column describes information representing the performance value related to item B. More specifically, the second row represents, for example, the performance value "1.2" related to item A and the performance value "2.49" related to item B that are measured at time instant "1." Fig. 8 is a graph illustrating the time-series information illustrated in Fig. 7, for each item. The ordinate indicates the performance value (actual measured value). The abscissa indicates time including the time instant (min) at which the performance value is measured. Referring to Fig. 8, a graph indicated by a solid line represents time-series information related to item A. A graph indicated by a dotted line represents time-series information related to item B.

For the sake of convenience, the above-mentioned configuration will be taken as an example, but the present invention to be described by taking the present example embodiment as an example is not limited to the above-mentioned configuration (the same applies to the subsequent example embodiments).

The process (step S1) for generating the correlation model illustrated in Fig. 6 will be described in detail below with reference to Figs. 7 and 9 to 11.

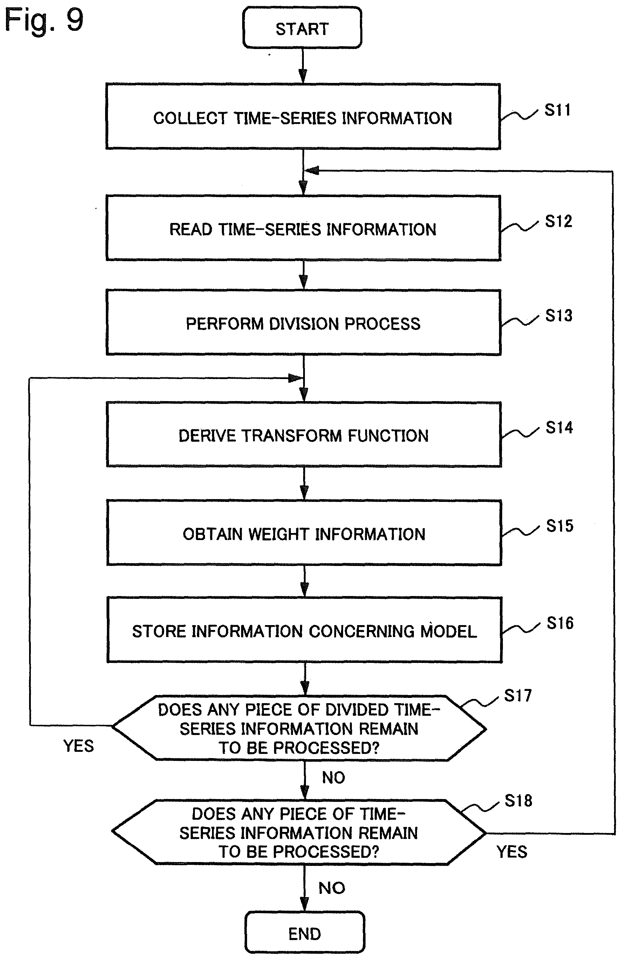

Fig. 9 is a flowchart illustrating an operation for generating the correlation model by the monitoring device 21 in the third example embodiment of the present invention.

The collection unit 23 collects time-series information from the system to be monitored 22. The collection unit 23 stores the collected time-series information in the performance information 29 (step S11).

The first division unit 24 reads time-series information (second time-series information) associated with two items (items A and B) during the learning period from the performance information 29 (step S12). The first division unit 24 performs division process for the read second time-series information. The first division unit 24 outputs the divided second time-series information to the second model generation unit 25 (step S13).

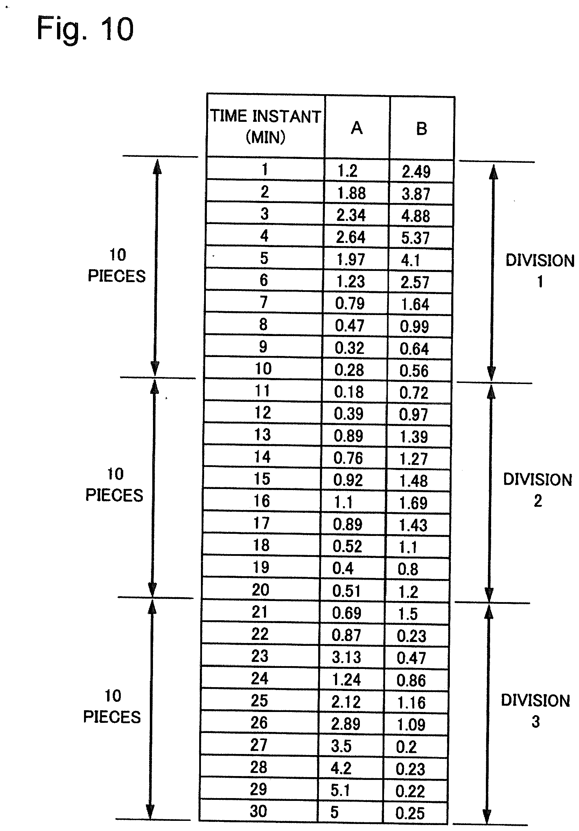

For the sake of convenience, assume, as an example, that the first division unit 24 divides the second time-series information illustrated in Fig. 7, on the basis of a predetermined number "10." The first division unit 24 can thus divide the second time-series information into three parts: "division 1," "division 2," and "division 3," as illustrated in Fig. 10.

Fig. 10 is a diagram illustrating a specific example of second time-series information divided by the first division unit 24 in the third example embodiment of the present invention. Fig. 10 illustrates how the second time-series information illustrated in Fig. 7 is divided every predetermined number "10."

The second model generation unit 25 derives the transform function between pieces of time-series information in the pieces of divided second time-series information (step S14).

The second model generation unit 25 obtains weight information based on the prediction error of the transform function, using function approximation (step S15). The second model generation unit 25 associates identification information capable of identifying the second time-series information and at least one or more the pieces of divided second time-series information, the generated correlation model, and weight information for the correlation model with each other, and stores them in model information 4 (step S16).

The following description assumes, as an example, that the second model generation unit 25 derives the transform function between time-series information for item A and time-series information for item B.

More specifically, the second model generation unit 25 obtains the transform function between items A and B, using the least squares method, as B(i) = a ^{∗} A(i) + b, where i is time instant; A(i) is the performance value related to item A measured at time instant i; B(i) is the performance value related to item B measured at time instant i; a and b are parameters determined by system identification processing for each piece of divided time-series information; ^{∗} denotes multiplication; and + denotes addition (the same applies to the subsequent example embodiments). The second model generation unit 25 is assumed to, for example, further obtain the value calculated by multiplication of the square error between items A and B by "- (minus) 1" as weight information.

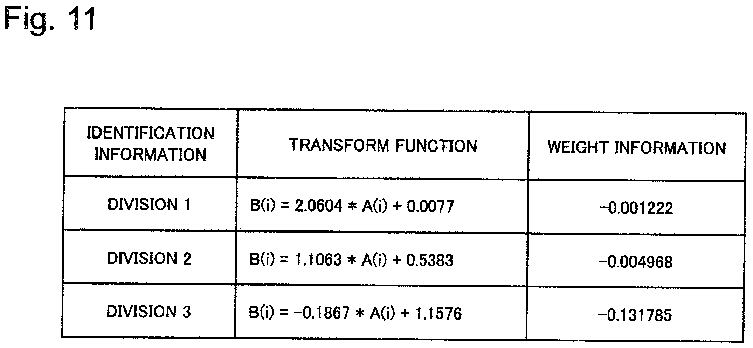

Fig. 11 is a table illustrating a specific example of the correlation model generated by the second model generation unit 25 in the third example embodiment of the present invention. That is, Fig. 11 is a table conceptually illustrating the model information 4 stored by the second model generation unit 25. Referring to Fig. 11, the first column describes information for identifying second time-series information and at least one or more the pieces of divided second time-series information. The second column describes the derived transform function. The third column describes the weight information.

As illustrated in Fig. 11, the second model generation unit 25 can obtain the transform function "B(i) = 2.0604 ^{∗} A(i) + 0.0077" and weight information "-0.001222" for division 1. The second model generation unit 25 can obtain the transform function "B(i) = 1.1063 ^{∗} A(i) + 0.5383" and weight information "-0.004968" for division 2. The second model generation unit 25 can obtain the transform function "B(i) = -0.1867 ^{∗} A(i) + 1.1576" and weight information "-0.131785" for division 3.

The second model generation unit 25 analyzes (determines) whether the transform function is derived for each piece of divided second time-series information. That is, the second model generation unit 25 determines whether any piece of divided time-series information remains to be processed in at least one or more the pieces of divided second time-series information. If the second model generation unit 25 determines that any piece of divided time-series information remains to be processed, it returns the process to step S14 ("YES" in step S17). If the second model generation unit 25 determines that no the pieces of divided time-series information remains to be processed, it advances the process to step S18 ("NO" in step S17). In this manner, the second model generation unit 25 can obtain the correlation between pieces of time-series information in all pieces of divided second time-series information by repeating the above-mentioned processing.

The processes in steps S12 to S17 are subsequently repeated for second time-series information to be processed included in the performance information 29 (step S18). The first division unit 24 analyzes whether processing for generating the correlation model has been performed for second time-series information included in the performance information 29. If the first division unit 24 determines that any piece of second time-series information remains to be processed, it returns the process to step S12 ("YES" in step S18).

The process (step S2) for analyzing changes in correlation illustrated in Fig. 6 will be described in detail below with reference to Figs. 11 to 16.

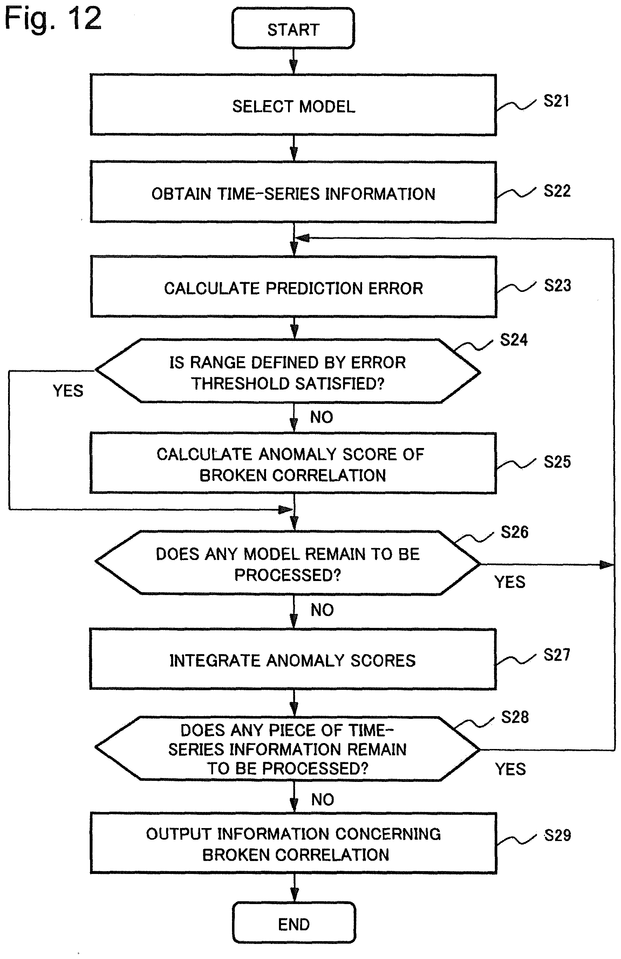

Fig. 12 is a flowchart illustrating an operation for analyzing changes in correlation by the monitoring device 21 in the third example embodiment of the present invention.

The selection unit 11 performs selection process based on the following types of information:
- at least one or more correlation model related to second time-series information obtained from the model information 4;
- information (for example, identification information) representing a particular piece of second time-series information based on which the correlation model is generated; and
- weight information for the correlation model.

That is, the selection unit 11 selects second time-series information associated with specific each item and at least one or more correlation model related to specific each item, on the basis of these types of information obtained from the model information 4. The selection unit 11 outputs the selected, second time-series information associated with specific each item and at least one or more correlation model related to specific each item to the correlation analysis unit 26 (step S21).

Selection process in step S21 will be described more specifically as an example below. The selection unit 11 selects the correlation model, for which the weight information indicates the largest value, of at least one or more correlation model related to each item. Then, the selection unit 11 is assumed to select all correlation models which satisfy the predetermined condition (for example, "-0.01" or more) when the value indicated by the weight information for the selected correlation model satisfies the predetermined condition. In this case, the largest value of the weight information illustrated in Fig. 11 is "-0.001222." The selection unit 11 determines that the weight information "-0.001222" is "-0.01" or more. As a result, the selection unit 11 selects second time-series information associated with specific each item of pieces of second time-series information associated with each item in at least one or more set of items, and all correlation models related to "division 1," "division 2," and "division 3." When the value of the weight information indicating the largest value does not satisfy the predetermined condition, the selection unit 11 selects neither second time-series information associated with each item nor the correlation model related to each item.

The correlation analysis unit 26 obtains the latest third time-series information from the performance information 29 (step S22). On the basis of at least one or more correlation model selected by the selection unit 11, and the obtained third time-series information, the correlation analysis unit 26 calculates the prediction error of the transform function for the time-series information (step S23).

The correlation analysis unit 26 determines whether the prediction error satisfies the range defined by the predetermined error threshold on the basis of the prediction error and the error threshold. If the correlation analysis unit 26 determines that the range defined by the error threshold is not satisfied, it advances the process to step S25 ("NO" in step S24). If the correlation analysis unit 26 determines that the range defined by the error threshold is satisfied, it advances the process to step S26 ("YES" in step S24).

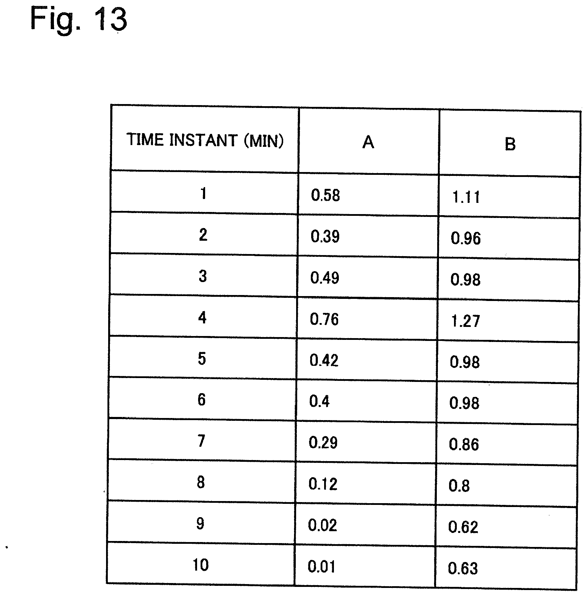

More specifically, the following description assumes, as an example, that the correlation analysis unit 26 obtains the time-series information illustrated in Fig. 13 from the performance information 29.

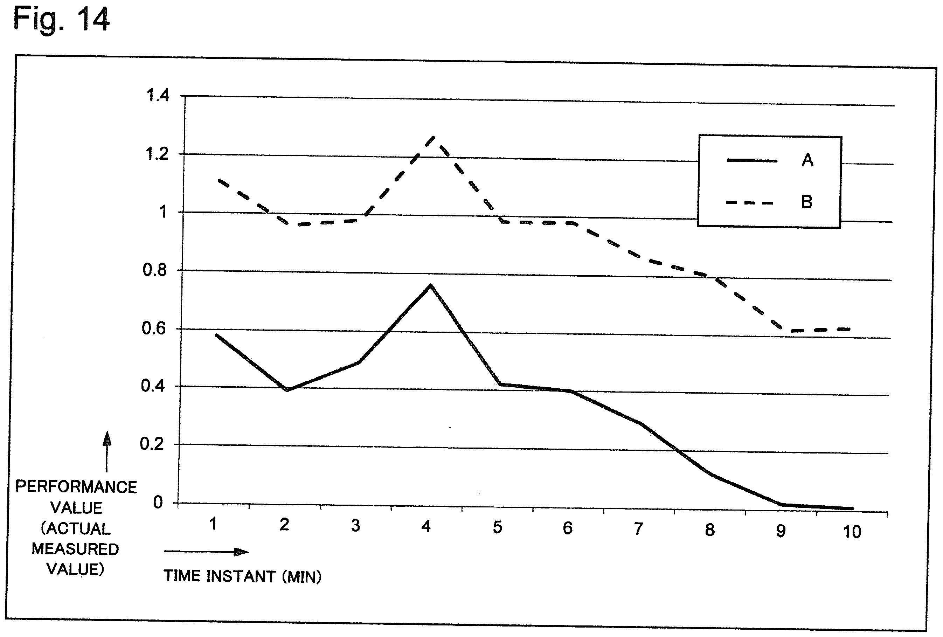

Fig. 13 is a table illustrating a specific example of time-series information (third time-series information) obtained during the period different from the learning period in the third example embodiment of the present invention. Fig. 14 is a graph illustrating the time-series information obtained during the period different from the learning period in the third example embodiment of the present invention.

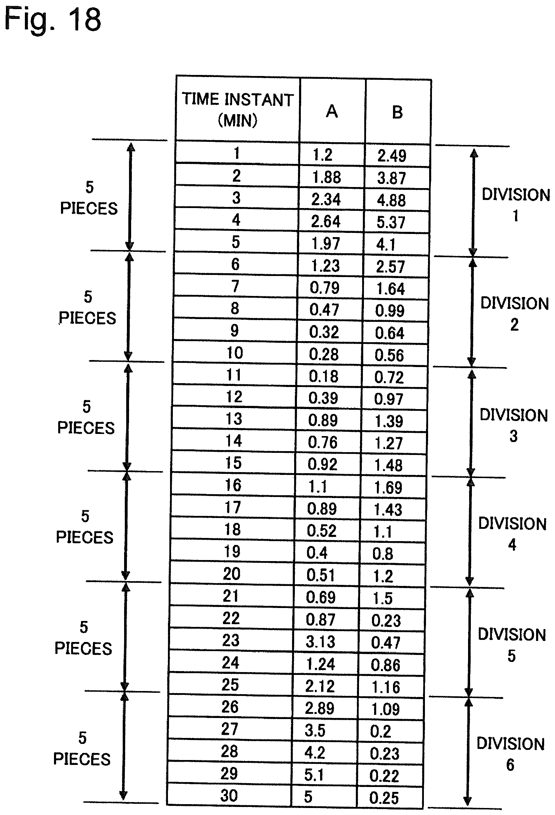

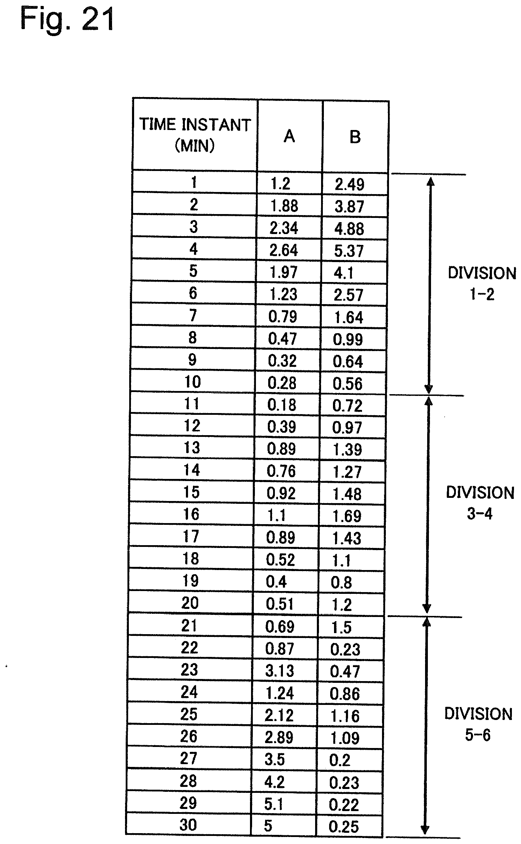

Referring to Fig. 13, the first column describes information representing time including the time instant (min) at which the performance value is measured. The second column describes information representing the performance value related to item A. The third column describes information representing the performance value related to item B. Since items illustrated in Figs. 18 and 21 (to be described later) are the same as those illustrated on the first to third columns of Figs. 10 and 13 mentioned above, a detailed description thereof will not be given.

Fig. 14 is a graph representing the time-series information illustrated in Fig. 13, for each item. The ordinate indicates the performance value (actual measured value). The abscissa indicates time including the time instant (min) at which the performance value is measured. Referring to Fig. 14, a graph indicated by a solid line represents time-series information related to item A. A graph indicated by a dotted line represents time-series information related to item B.

The correlation analysis unit 26 calculates whether the correlation for the third time-series information illustrated in Fig. 13 satisfies the range defined by the predetermined error threshold, for all correlation models selected by the selection unit 11.

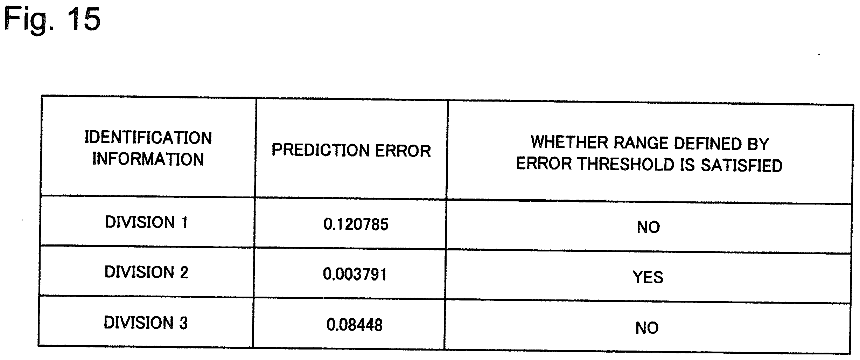

The calculation result obtained when the values illustrated in Fig. 13 are used will be described as an example below. The following description assumes that the error threshold is "0.01." Fig. 15 illustrates the calculation result. That is, Fig. 15 illustrates the prediction error obtained using the square error and information representing whether the prediction error satisfies the range defined by the error threshold. Fig. 15 illustrates the obtained prediction error and information representing whether the prediction error has exceeded the error threshold.

Fig. 15 is a table illustrating a specific example of the result of analyzing the correlation between each correlation model and the time-series information by the correlation analysis unit 26 in the third example embodiment of the present invention. Referring to Fig. 15, the first column describes identification information capable of identifying second time-series information and at least one or more the pieces of the divided second time-series information. The second column describes information representing the prediction error obtained by the correlation analysis unit 26. The third column describes information representing the analysis result obtained by the correlation analysis unit 26.

For example, the prediction error of division 1 is "0.120785," as represented on the second column of Fig. 15. The correlation analysis unit 26 determines that division 1 does not satisfy the error threshold "0.01." That is, the correlation analysis unit 26 determines that the prediction error of division 1 falls below the error threshold.

When the correlation analysis unit 26 determines that the prediction error does not satisfy the range defined by the error threshold, it determines that the broken correlation has been detected. The correlation analysis unit 26 calculates an anomaly score for the broken correlation. The correlation analysis unit 26 outputs the calculated anomaly score to the second determination unit 27. That is, the correlation analysis unit 26 outputs the analysis result to the second determination unit 27 (step S25).

The correlation analysis unit 26 may use, for example, a configuration which outputs the analysis result represented by a binary value to the second determination unit 27. Alternatively, the correlation analysis unit 26 may use, for example, a configuration which outputs the analysis result represented by the continuous value representing the prediction error to the second determination unit 27.

The processes in steps S23 to S25 are repeated for all correlation models selected by the selection unit 11. That is, the correlation analysis unit 26 determines whether the processes in steps S23 to S25 have been performed for all of at least one or more correlation model selected by the selection unit 11 (step S26). If the correlation analysis unit 26 determines that these processes have been performed for all correlation models, it advances the process to step S27. That is, if the correlation analysis unit 26 determines that no correlation model remains to be processed, it advances the process to step S27 ("NO" in step S26).

If the correlation analysis unit 26 determines that the above-mentioned processes have not been performed for all correlation models, it returns the process to step S23. That is, if the correlation analysis unit 26 determines that any correlation model remains to be processed, it returns the process to step S23 ("YES" in step S26).

The second determination unit 27 integrates anomaly scores in all correlation models for each item upon receiving the analysis result from the correlation analysis unit 26. That is, the second determination unit 27 integrates anomaly scores in all correlation models on the basis of the analysis result, and information (identification information) representing the particular piece of second time-series information from which the correlation model obtained from the model information 4 has been generated. The second determination unit 27 thus determines an anomaly related to each item. The second determination unit 27 outputs the determination result obtained by integration (for example, an integrated anomaly score) to the failure analysis unit 28 (step S27).

The process in step S27 will be described more specifically as an example below. In this case, for example, the smallest one of prediction errors of at least one or more correlation model selected by the selection unit 11 is assumed to be the prediction error related to third time-series information. The error threshold is assumed to be "0.01."

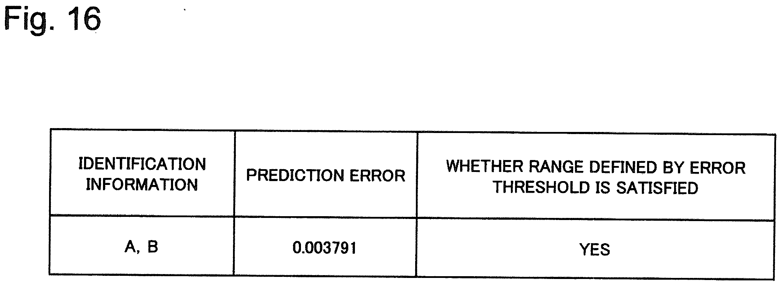

Referring to Fig. 15, the smallest prediction error is the prediction error "0.003791" of "division 2" among those of "division 1," "division 2," and "division 3." Accordingly, the prediction error for third time-series information associated with each item including items A and B is "0.003791." The second determination unit 27 determines whether the smallest one of prediction errors for third time-series information satisfies the range defined by the predetermined error threshold, for the correlation function represented by at least one or more correlation model. That is, since the error threshold is larger than the prediction error (0.003791 < 0.01), the second determination unit 27 determines that the correlation between the correlation model related to specific each tems and newly obtained third time-series information satisfies the range defined by the predetermined error threshold. The determination result may be in, for example, a mode illustrated in Fig. 16. The second determination unit 27 can thus determine an anomaly for specific each item.

Fig. 16 is a table illustrating a specific example of the result of determining the correlation between each correlation model and the time-series information by the second determination unit 27 in the third example embodiment of the present invention. Referring to Fig. 16, the first column describes identification information capable of identifying each item. The second column describes information representing the obtained prediction error. The third column describes information representing the determination result obtained by the second determination unit 27.

In this manner, as an example, the prediction error of "division 2" is calculated as the prediction error for second time-series information because of the following. That is, this is done because it is determined that the state related to each item represented by newly obtained third time-series information is the same as that related to each item represented in "division 2."

The processes in steps S23 to S27 are subsequently repeated for pieces of second time-series information associated with at least one or more specific each item selected by the selection unit 11. That is, the correlation analysis unit 26 determines whether the processes in steps S23 to S27 have been performed for all pieces of selected second time-series information associated with at least one or more specific each item (step S28). If the correlation analysis unit 26 determines that these processes have been performed for all pieces of second time-series information, it advances the process to step S29. That is, if the correlation analysis unit 26 determines that no piece of second time-series information associated with specific each item remains to be processed, it advances the process to step S29 ("NO" in step S28).

If the correlation analysis unit 26 determines that the above-mentioned processes have not been performed for all pieces of second time-series information, it returns the process to step S23. That is, if the correlation analysis unit 26 determines that any piece of second time-series information associated with specific each item remains to be processed, it returns the process to step S23 ("YES" in step S28).

The failure analysis unit 28 performs failure analysis of the determination result obtained from the second determination unit 27 in accordance with the analysis setting stored in the analysis setting information 30. The failure analysis unit 28 outputs the details of the detected broken correlation and the result of failure analysis to, for example, the user. That is, the failure analysis unit 28 outputs information concerning a detected broken correlation (step S29).

In this manner, the monitoring device 21 according to the present example embodiment can achieve the effect described in each example embodiment, and in addition, can more rapidly detect a state related to the system.

The reason is that the monitoring device 21 further includes the collection unit 23 which collects pieces of time-series information related to a plurality of items from the system to be monitored 22, and the failure analysis unit 28 which performs failure analysis of the determination result obtained from the second determination unit 27 in accordance with the analysis setting stored in the analysis setting information 30. The monitoring device 21 performs the process of the first model generation unit 2 by sharing between the first division unit 24 and the second model generation unit 25. The monitoring device 21 then performs the processing of the first determination unit 3 by sharing between the correlation analysis unit 26 and the second determination unit 27.

### <Fourth Example Embodiment>

A fourth example embodiment based on the monitoring device 21 according to the third example embodiment of the present invention described above will be described next. Features according to the present example embodiment will be mainly described hereinafter. The same reference numerals denote the same configurations as in each of the above-described example embodiments, and a repetitive description thereof will not be given.

A monitoring system 40 including a monitoring device 41 in the fourth example embodiment of the present invention will be described below with reference to Figs. 7 and 17 to 25.

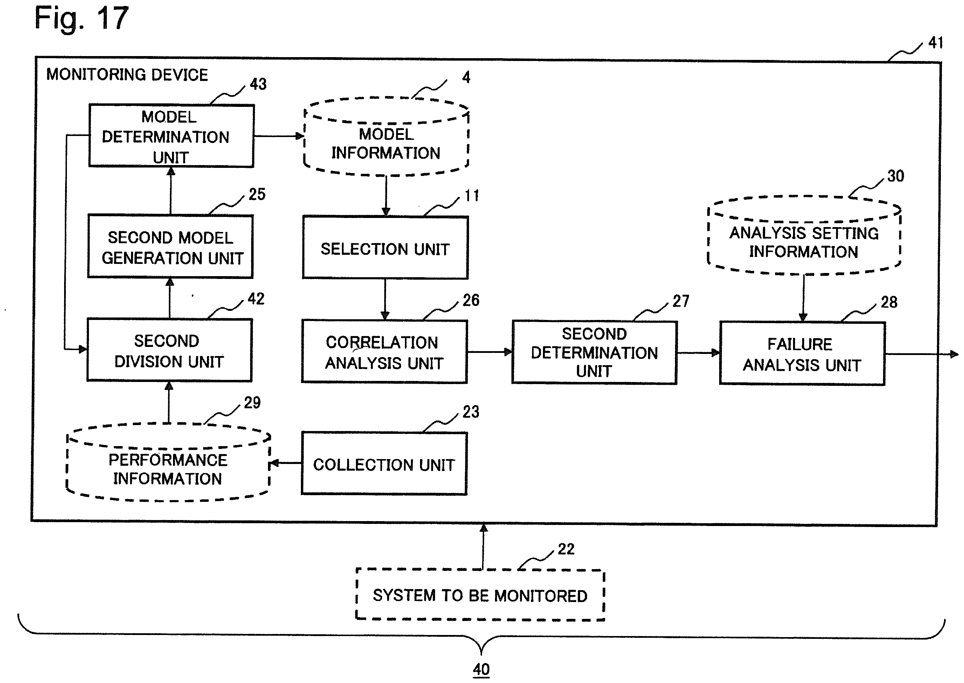

Fig. 17 is a block diagram illustrating the configuration of the monitoring system 40 including the monitoring device 41 in the fourth example embodiment of the present invention.

Referring to Fig. 17, the monitoring system 40 mainly includes the monitoring device 41 and the system to be monitored 22. The monitoring device 41 includes the collection unit 23, a second division unit 42, the second model generation unit 25, a model determination unit 43, a selection unit 11, the correlation analysis unit 26, the second determination unit 27, and the failure analysis unit 28.

In the present example embodiment, the monitoring device 41 further includes the second division unit 42 and the model determination unit 43, unlike the monitoring device 21 described in the third example embodiment. That is, the model determination unit 43 determines whether the generated model appropriately represents the state related to each item. The model determination unit 43 provides the division condition under which second time-series information is divided in accordance with the determination result to the second division unit 42. The second division unit 42 performs division process for the second time-series information again in accordance with the division condition obtained from the model determination unit 43, in addition to the operation of the first division unit 24.

On the basis of second time-series information obtained from the second model generation unit 25 and at least one or more of the models related to the second time-series information, the model determination unit 43 determines whether these models appropriately represent the state related to each item represented by the second time-series information. That is, the model determination unit 43 determines whether at least one or more of the models matches the state related to each item represented by the second time-series information. The model determination unit 43 further determines whether to generate again (to be referred to as "regenerate" hereinafter) the model related to the second time-series information in accordance with the determination result.

More specifically, on the basis of second time-series information and at least one or more correlation model related to the second time-series information, the model determination unit 43 determines whether these correlation models match the state related to each item represented by the second time-series information. When the model determination unit 43 determines that the above-mentioned correlation models do not match the state, it requests the second division unit 42 to regenerate the correlation model related to second time-series information. That is, the model determination unit 43 outputs information representing the division condition for second time-series information and information for issuing an instruction to regenerate the correlation model related to the second time-series information to the second division unit 42. In other words, the model determination unit 43 provides information representing the division condition for second time-series information to the second division unit 42. The model determination unit 43 then issues a request to regenerate the correlation model related to second time-series information generated in accordance with the division condition.

When the model determination unit 43 determines that the above-mentioned correlation models match the above-mentioned state, it determines to complete generation of the correlation model. The model determination unit 43 associates and stores in model information 4, the following types of information with each other:
- identification information capable of identifying second time-series information and at least one or more the pieces of divided second time-series information;
- at least one or more correlation model generated by the second model generation unit 25; and
- weight information for the correlation model.

That is, the model determination unit 43 associates identification information obtained from the second model generation unit 25, at least one or more generated correlation model, and weight information with each other and stores them in the model information 4. Determination processing by the model determination unit 43 will be described in detail later in the present example embodiment.

The second division unit 42 performs the same operation as that of the first division unit 24 described in the third example embodiment. In addition, the second division unit 42 processes the second time-series information in accordance with information representing the division condition obtained from the model determination unit 43. That is, the second division unit 42 generates newly divided second time-series information on the basis of at least one or more the pieces of divided second time-series information used to generate the model determined not to match, in accordance with the information representing the division condition.

For the sake of convenience, at least one or more the pieces of divided second time-series information used to generate a model will be referred to as second time-series information P by addition of "P" to the end hereinafter. Newly divided second time-series information will be referred to as second time-series information Q by addition of "Q" to the end hereinafter.

The second division unit 42, for example, combines a piece of divided second time-series information P with another piece of divided second time-series information P different from the former piece of divided second time-series information P, in accordance with the information representing the division condition. As a result, the second division unit 42 generates newly divided second time-series information Q. The second division unit 42 provides the newly divided second time-series information Q to the second model generation unit 25.

More specifically, as a method for combining pieces of divided second time-series information P, the second division unit 42 may use, for example, a configuration which combines some of the pieces of divided second time-series information P.

The second model generation unit 25 can thus perform processing for generating the model related to the newly divided second time-series information Q. The second model generation unit 25 can provide the generated model, weight information for the model, and second time-series information Q to the model determination unit 43.

The operations of the second division unit 42 and the model determination unit 43 will be described in detail, more specifically as an example below with reference to Figs. 7 and 18 to 23.

For the sake of convenience, the following description assumes, as an example, that the monitoring device 41 processes second time-series information associated with each item including two items A and B. In doing this, the collection unit 23 is assumed to collect time-series information related to items A and B from the system to be monitored 22. The collection unit 23 is assumed to, for example, store the time-series information in performance information 29, as illustrated in Fig. 7.

The second division unit 42 is assumed to divide the second time-series information on the basis of a predetermined number "5." Thus, the second division unit 42 is assumed to divide the second time-series information into six parts: "division 1" to "division 6," as illustrated in Fig. 18.

Fig. 18 is a diagram illustrating a specific example of second time-series information divided by the second division unit 42 in the fourth example embodiment of the present invention. Fig. 18 represents the mode in which the second time-series information illustrated in Fig. 7 is divided every predetermined number "5."

For the sake of convenience, the second division unit 42 has been described in the above-described present example embodiment by taking as an example, the configuration which divides second time-series information on the basis of a predetermined number. However, example embodiments according to the present invention are not limited to this configuration. The second division unit 42 may use the configuration which divides second time-series information in accordance with a division condition when it receives information representing the division condition from the model determination unit 43.

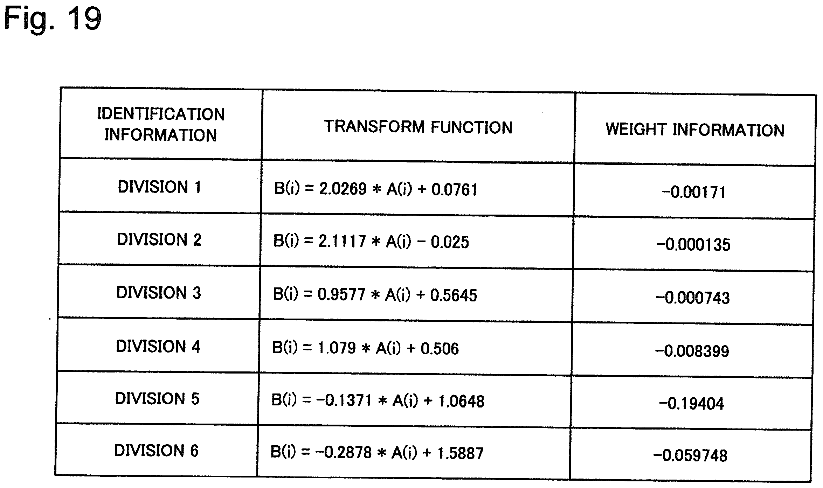

The second model generation unit 25 derives the transform function between pieces of time-series information related to the newly divided second time-series information Q. The second model generation unit 25 obtains weight information based on the prediction error of the transform function, using function approximation. The second model generation unit 25 can thus obtain the transform function and weight information, as illustrated in Fig. 19.

Fig. 19 is a table illustrating a specific example of a correlation model generated by the second model generation unit 25 in the fourth example embodiment of the present invention. Referring to Fig. 19, the first column describes identification information capable of identifying second time-series information and at least one or more the pieces of newly divided second time-series information Q. The second column describes information representing the transform function derived by the second model generation unit 25. The third column describes the weight information obtained by the second model generation unit 25.

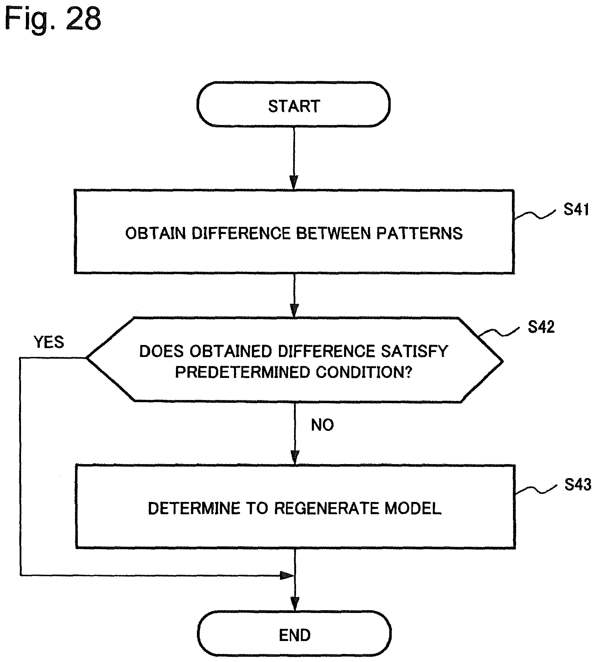

Process for determining whether to regenerate the correlation model will be described in detail below with reference to Figs. 19 and 28.

Fig. 28 is a flowchart illustrating an operation for determining whether to regenerate a correlation model by the model determination unit 43 in the fourth example embodiment of the present invention.

The model determination unit 43 determines whether to regenerate the correlation model on the basis of at least one or more correlation model generated by the second model generation unit 25, illustrated in Fig. 19, or weight information for the correlation model.

The model determination unit 43, for example, obtains the difference between parameters (to be described later) for each set of possible correlation models of at least one or more correlation model. That is, the model determination unit 43 obtains the difference between parameters on the basis of parameters included in two different transform functions (step S41). The model determination unit 43 determines whether the obtained difference between parameters satisfies the predetermined condition (second condition) (step S42). If the model determination unit 43 determines that the predetermined condition is not satisfied, it advances the process to step S43 ("NO" in step S42). That is, if the model determination unit 43 determines that the predetermined condition is not satisfied, it determines that a correlation model for which the difference between parameters is obtained does not match the state related to each item.

The model determination unit 43 may use a configuration which determines to regenerate the correlation model (step S43). That is, the model determination unit 43 provides information representing the division condition to the second division unit 42. The information representing the division condition means information for issuing an instruction to combine at least one or more the pieces of divided second time-series information P used to generate the correlation model determined not to match.

As an example, the model determination unit 43 may use a configuration which determines to regenerate the correlation model when the difference between parameters is equal to or smaller than a predetermined condition (threshold). In this case, the model determination unit 43 determines to regenerate the correlation model for a set of correlation models, for which the difference between parameters is equal to or smaller than a predetermined threshold, of at least one or more correlation model. The model determination unit 43 outputs to the second division unit 42, information representing the division condition for issuing an instruction to combine at least one or more the pieces of divided second time-series information P used to generate the correlation model, for each set of correlation models to be regenerated.

An operation when a set of two transform functions with parameters "a" and "b" having close values of a plurality of transform functions "B(i) = a ^{∗} A(i) + b" will be described more specifically as an example below.

The following description assumes, for example, that a set of transform functions is expressed as "B(i) = a1 ^{∗} A(i) + b1" and "B(i) = a2 ^{∗} A(i) + b2."

The model determination unit 43 is assumed to output information representing the division condition for issuing an instruction to combine each piece of divided second time-series information P related to the transform functions "B(i) = a1 ^{∗} A(i) + b1" and "B(i) = a2 ^{∗} A(i) + b2." The model determination unit 43 is assumed to determine to regenerate the correlation model when the difference (|a1-a2| + |b1-b2|) between parameters is, for example, smaller than a predetermined threshold "1" (|a1-a2| + |b1-b2| < 1).

The model determination unit 43 obtains the difference between parameters included in respective transform functions related to second time-series information.

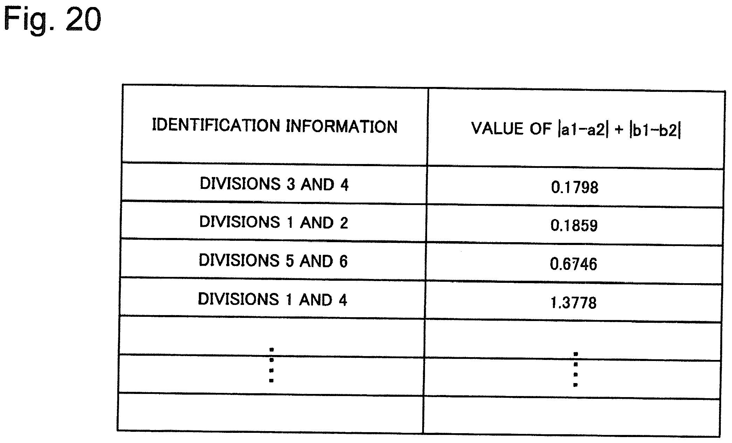

Fig. 20 is a table illustrating a specific example of the difference between parameters obtained by the model determination unit 43 in the fourth example embodiment of the present invention. Referring to Fig. 20, the first column describes identification information capable of identifying second time-series information to be divided and at least one or more the pieces of divided second time-series information P. The second column describes information representing the difference between parameters obtained by the model determination unit 43. For the sake of convenience, assume that Fig. 20 illustrates the values of the difference between parameters (|a1-a2| + |b1-b2|) in ascending order.

A pair of "division 3" and "division 4," a pair of "division 1" and "division 2," and a pair of "division 5" and "division 6" satisfy "|a1-a2| + |b1-b21 < 1," as illustrated in Fig. 20. The model determination unit 43 combines pieces of divided second time-series information P for each of these pairs. The model determination unit 43 requests the second division unit 42 to regenerate the correlation model on the basis of the combined second time-series information Q. That is, the model determination unit 43 requests the second division unit 42 to combine pieces of divided second time-series information P for each of the pair of "division 3" and "division 4," the pair of "division 1" and "division 2," and the pair of "division 5" and "division 6," as the division condition.

Fig. 21 is a table illustrating a specific example of second time-series information Q combined by the second division unit 42 in the fourth example embodiment of the present invention.

The second division unit 42 generates second time-series information Q represented in "division 1-2," in accordance with the division condition obtained from the model determination unit 43, as illustrated in Fig. 21. That is, the second division unit 42 combines pieces of divided second time-series information P related to "division 1" and "division 2" to generate second time-series information Q represented in "division 1-2." The second division unit 42 combines pieces of divided second time-series information P related to "division 3" and "division 4" to generate second time-series information Q represented in "division 3-4." The second division unit 42 combines pieces of divided second time-series information P related to "division 5" and "division 6" to generate second time-series information Q represented in "division 5-6." As a result, the second time-series information is newly divided into three pieces of second time-series information Q represented in "division 1-2," "division 3-4," and "division 5-6." The second division unit 42 outputs the pieces of newly divided second time-series information Q to the second model generation unit 25.

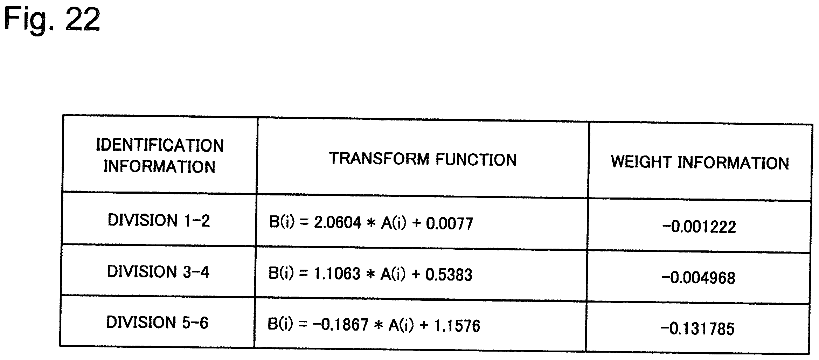

The second model generation unit 25 thus derives the transform function between pieces of time-series information related to the second time-series information Q divided by the second division unit 42. The second model generation unit 25 further obtains weight information based on the prediction error of the transform function, using function approximation. The second model generation unit 25 can thus obtain the transform function and weight information, as illustrated in Fig. 22.

Fig. 22 is a table illustrating a specific example of a correlation model regenerated by the second model generation unit 25 in the fourth example embodiment of the present invention. Referring to Fig. 22, the first column describes identification information capable of identifying second time-series information to be divided and at least one or more the pieces of divided second time-series information Q. The second column describes information representing the transform function derived by the second model generation unit 25. The third column describes the weight information obtained by the second model generation unit 25.

The model determination unit 43 determines again whether to regenerate the correlation model on the basis of at least one or more correlation model generated by the second model generation unit 25 or weight information for the correlation model.

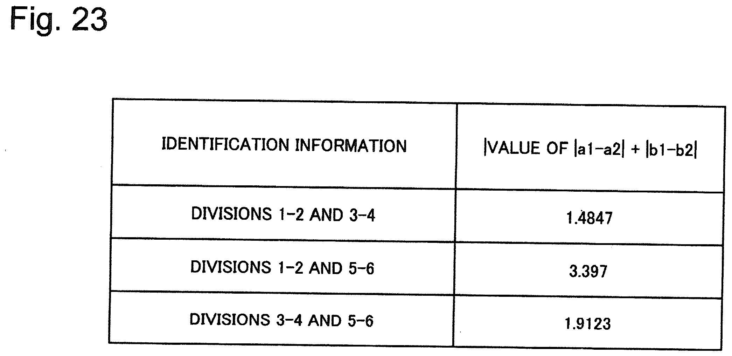

Fig. 23 is a table illustrating a specific example of the difference between parameters obtained by the model determination unit 43 in the fourth example embodiment of the present invention. Referring to Fig. 23, the first column describes identification information capable of identifying second time-series information to be divided and at least one or more the pieces of divided second time-series information Q. The second column describes information representing the difference between parameters obtained by the model determination unit 43.

Referring to Fig. 23, no set of correlation models satisfies "|a1-a2| + |b1-b2| < 1." The model determination unit 43 determines to regenerate no correlation model. The model determination unit 43 associates identification information capable of identifying second time-series information and at least one or more the pieces of divided second time-series information Q, the generated model, and weight information for the correlation model with each other, and stores them in the model information 4.

For the sake of convenience, the model determination unit 43 has been described in the above-described present example embodiment by taking as an example, a configuration which determines to regenerate the correlation model, in accordance with the difference between parameters. However, example embodiments according to the present invention are not limited to this configuration. The model determination unit 43 may use a configuration which determines to regenerate the correlation model when at least two or more correlation models have been generated.

In this case, when at least two or more correlation models have been generated, the model determination unit 43 determines that at least one or more correlation model does not match the state related to each item. The model determination unit 43 selects all correlation models, for which the weight information satisfies the predetermined condition (third condition), of generated correlation models. The model determination unit 43 outputs to the second division unit 42, information representing the division condition for issuing an instruction to combine at least one or more the pieces of divided second time-series information P used to generate all selected correlation models. The model determination unit 43 requests the second division unit 42 to regenerate the correlation model related to the newly divided second time-series information Q.

For the sake of convenience, the second division unit 42 has been described in the above-described present example embodiment by taking as an example, a configuration which divides second time-series information on the basis of the predetermined number. A method for dividing second time-series information at the division boundaries (for example, the points of change) where the value of the time-series information illustrated in the second example embodiment changes considerably will be described in detail below with reference to Figs. 7, 24, and 25.

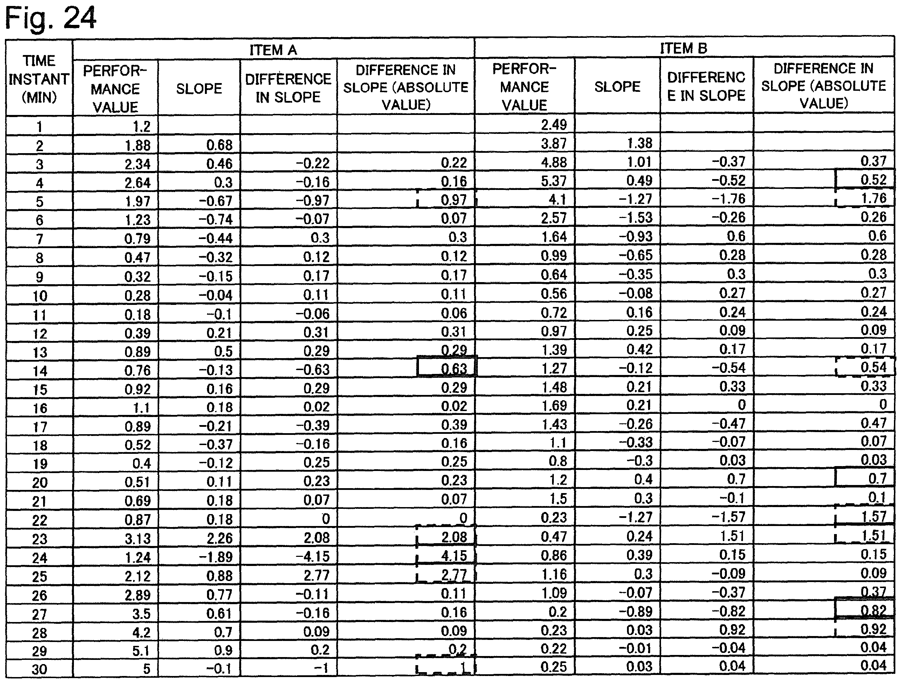

Fig. 24 is a table illustrating a specific example of a value related to the slope obtained by the second division unit 42 in the fourth example embodiment of the present invention. That is, Fig. 24 is a table including the time-series information (second time-series information) illustrated in Fig. 7. Referring to Fig. 24, the first column describes information representing time including the time instant (min) at which the performance value is measured. The second column describes information representing the performance value related to item A. That is, the second column corresponds to the second column in Fig. 7. The third column describes information representing the slope related to item A. The fourth column describes information representing the difference in slope related to item A. The fifth column describes information representing the absolute value of the difference in slope related to item A. The sixth column describes information representing the performance value related to item B. That is, the sixth column corresponds to the third column in Fig. 7. The seventh column describes information representing the slope related to item B. The eighth column describes information representing the difference in slope related to item B. The ninth column describes information representing the absolute value of the difference in slope related to item B.

Fig. 25 is a graph conceptually illustrating the mode in which second time-series information is divided by the second division unit 42 in the fourth example embodiment of the present invention. Fig. 25 is a graph illustrating second time-series information and division boundaries (for example, the points of division) used for division by the second division unit 42, for each item. The ordinate indicates the performance value (actual measured value). The abscissa indicates time including the time instant (min). Referring to Fig. 25, a graph indicated by a solid line represents time-series information related to item A. A graph indicated by a dotted line represents time-series information related to item B. Points of division S1 to S4 represent division boundaries.

The second division unit 42 divides second time-series information at the points where the absolute value of the second-order derivative of the value constituting the second time-series information illustrated in Fig. 7 is equal to or larger than the predetermined reference (value). More specifically, on the basis of second time-series information related to items A and B illustrated in Fig. 24, the second division unit 42 obtains the slope between values constituting the second time-series information, the difference in slope, and the absolute value of the difference in slope,. The second division unit 42 divides the second time-series information at four division boundaries, as illustrated in Fig. 25, based on results of the former determination.

More specifically, the following description assumes that the second time-series information illustrated in Fig. 24 is divided at the points where the absolute value of the value representing the difference in slope for the performance value constituting the second time-series information is, for example, larger than a predetermined reference "0.5." The following description assumes, however, that even when the absolute value is larger than the predetermined reference "0.5," this absolute value is not handled as the division boundary when it applies to the following condition. That is, the following description assumes that when the performance value associated with the absolute value larger than the reference is not five performance values after that associated with the absolute value defined as the immediately preceding division boundary, the absolute value associated with the former performance value is not handled as the division boundary. In other words, assume that upon measurement of the performance value associated with the absolute value defined as the division boundary, the absolute values associated with the first to fifth performance values, starting from the performance value associated with the absolute value defined as the division boundary, among the sequentially measured performance values are not handled as division boundaries. The sequentially measured performance values mean herein the performance values, each of which is measured every minute in the example illustrated in Fig. 24.

The slope is a value representing the difference between the performance value obtained at the specific time instant and that obtained at the time instant immediately preceding the specific time instant. More specifically, the slope is, for example, the value representing the difference between the performance value obtained at specific time instant "4 min" and that obtained at time instant "3 min" immediately preceding "4 min." That is, in the present example embodiment, as an example, the immediately preceding time instant means a minute before the specific time instant. The immediately succeeding time instant (to be described later) means a minute after the specific time instant. The difference in slope is a value representing the difference between the specific slope obtained on the basis of the performance value obtained at the specific time instant and that obtained at a time instant immediately preceding the specific time instant, and a slope obtained on the basis of the performance value obtained at the specific time instant and that obtained at the time instant immediately succeeding the specific time instant.

A method for setting the above-mentioned division boundaries will be described more specifically below with reference to Fig. 24. For the sake of convenience, referring to Fig. 24, the division boundaries are indicated by rectangles (solid lines). Referring again to Fig. 24, values which are referred to but are not handled as division boundaries hereinafter are indicated by rectangles (broken lines).

As indicated by rectangles (broken lines) in Fig. 24, when the fifth performance value, starting from the performance value associated with the absolute value handled as the immediately preceding division boundary, is not passed, the absolute value is not handled as the division boundary. That is, in the following description, the absolute value associated with the performance value measured within a period of 5 min, starting from the time instant at which the performance value associated with the absolute value handled as the immediately preceding division boundary is measured, is not handled as the division boundary. As indicated by rectangles (solid lines) in Fig. 24, four points having absolute values "0.52," "0.63," "0.7," and "0.82" are selected as division boundaries. The present example embodiment assumes, however, that in selecting the four points, an absolute value "0.63" of item A is selected while an absolute value "0.54" of item B is not selected at time instant "14 min" illustrated in Fig. 24.

The case where the model determination unit 43 determines whether the model appropriately represents the state related to each item including at least two or more items to determine whether the model determination unit 43 regenerates the model in accordance with the determination result has been taken as an example in the present example embodiment. However, example embodiments according to the present invention are not limited to this configuration. The model determination unit 43 may determine whether to regenerate the model, in response to, for example, a request from the user.

In this manner, the monitoring device 41 according to the present example embodiment can achieve the effect described in each example embodiment, and in addition, can more accurately detect a state related to the system.

The reason is that the monitoring device 41 includes the model determination unit 43 which determines whether the generated model matches the state related to each item represented by second time-series information. In addition, the monitoring device 41 includes the second division unit 42 which generates time-series information newly divided to allow generation of a model better matching the above-mentioned state, in accordance with the determination result obtained by the model determination unit 43.

### <Fifth Example Embodiment>

An example embodiment based on the monitoring device 21 according to the third example embodiment of the present invention described above will be described next. Features according to the present example embodiment will be mainly described hereinafter. The same reference numerals denote the same configurations as in each of the above-described example embodiments, and a repetitive description thereof will not be given.

A chemical manufacturing plant that is one type of plant, for example, accelerates the reaction of a material by predetermined temperatures and predetermined pressures. The chemical manufacturing plant aims at obtaining a desired product at high purity. Therefore, the chemical manufacturing plant may perform adjustment such as valve opening and closing, as appropriate.

The temperature and the pressure of each portion can be obtained by, for example, sensors. The temperature and the pressure in a normal state may maintain a predetermined relationship. The valve opening and closing effects the temperature and the pressure. Therefore, this relationship of the temperature and the pressure is considered to change depending on the state of the valve.

However, valve opening and closing needs to be performed for, for example, adjustment of the reaction rate of the product and safe operation within the specs of the plant. Even if the above-mentioned relationship varies, any of such relationships before and after this variation is expected to hold in a normal state albeit differently.

Applying the monitoring device 21 in the above-described example embodiment to the plant having a plurality of such different states enables anomaly detection with less false alarm in the plant.

A configuration in the present example embodiment will be described below. The monitoring device 21 in the present example embodiment includes the collection unit 23, the first division unit 24, the second model generation unit 25, the selection unit 11, the correlation analysis unit 26, the second determination unit 27, and the failure analysis unit 28, as illustrated in Fig. 5. The system to be monitored 22 illustrated in Fig. 5 serves as, for example, the above-mentioned chemical manufacturing plant.

The collection unit 23 collects pieces of sensor measurement information (as an example, values related to items such as a temperature sensor and a pressure sensor) from the system to be monitored 22 (plant) for each predetermined time interval (for example, every minute). The collection unit 23 stores the pieces of collected measurement information associated on the time-series basis and related to each item in performance information 29.

Since other configurations and operations are the same as those described in the third example embodiment, a repetitive description thereof will not be given.

In this manner, the monitoring device 21 according to the present example embodiment can achieve the effect described in each example embodiment and in addition, can achieve anomaly detection with less false alarm in the plant having a plurality of different normal states.

### <Sixth Example Embodiment>

An example embodiment based on the monitoring device 21 according to the third example embodiment of the present invention described above will be described next. Features according to the present example embodiment will be mainly described hereinafter. The same reference numerals denote the same configurations as in each of the above-described example embodiments, and a repetitive description thereof will not be given.

A moving body such as an automobile, a motorcycle, a ship, or an airplane generates power in the engine by combusting a fuel. The moving body further transmits the generated power to, for example, tires, propellers, or the like using an internal mechanism. The moving body is known to obtain a thrust in this way. A predetermined relationship is expected to hold between the fuel consumption and the thrust within the range in which the moving body operates normally. On the other hand, the relationship to hold may vary depending on the external environment such as the atmospheric temperature, the weather, and the roughness of the road surface.

However, any of such different relationships is expected to hold in a normal state albeit differently.

Applying the monitoring device 21 in the above-described example embodiment to the moving body having a plurality of such different states enables anomaly detection with less false alarm in the moving body.

A configuration in the present example embodiment will be described below. The monitoring device 21 in the present example embodiment includes the collection unit 23, the first division unit 24, the second model generation unit 25, the selection unit 11, the correlation analysis unit 26, the second determination unit 27, and the failure analysis unit 28, as illustrated in Fig. 5. The system to be monitored 22 illustrated in Fig. 5 serves as, for example, the above-mentioned moving body such as the automobile, the motorcycle, the ship, or the airplane.

The collection unit 23 collects pieces of sensor measurement information (as an example, values related to items such as a fuel sensor and a speed sensor) from the system to be monitored 22 (moving body) for each predetermined time interval (for example, every minute). The collection unit 23 stores the pieces of collected measurement information associated on the time-series basis and related to each item in performance information 29.

Since other configurations are the same as those described in the third example embodiment, a repetitive description thereof will not be given.

In this manner, the monitoring device 21 according to the present example embodiment can achieve the effect described in each example embodiment and in addition, can achieve anomaly detection with less false alarm in the moving body having a plurality of different normal states.

### (Hardware Configuration)

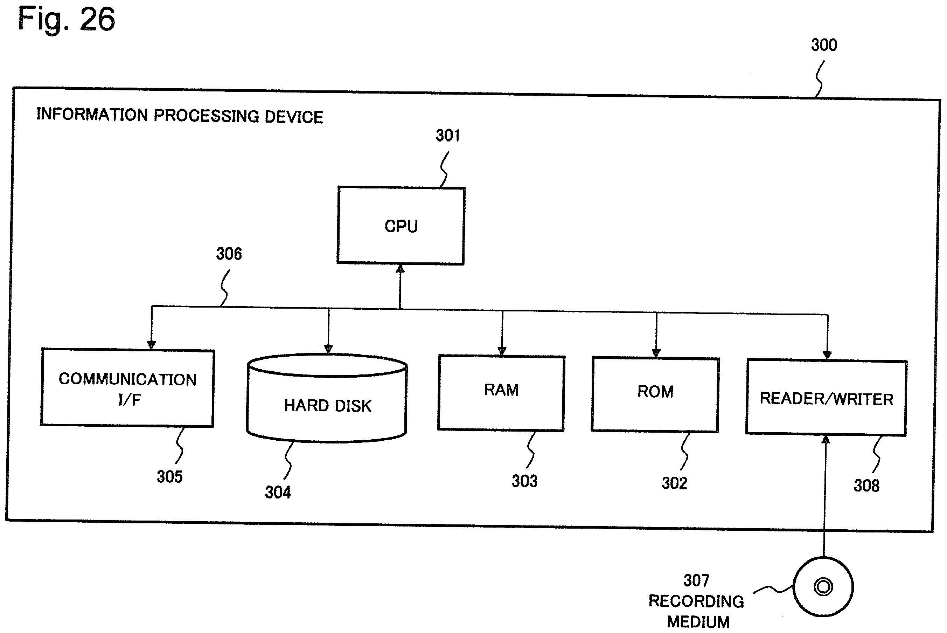

Each unit illustrated in the drawings in the above-described example embodiments can be interpreted as the functional (processing) unit (software module) of a software program. Each of these software modules may be implemented in dedicated hardware. Note, however, that the distinction of each unit illustrated in these drawings defines a configuration for the sake of convenience only, and various configurations are possible in implementation. An exemplary hardware environment in this case will be described below with reference to Fig. 26.

Fig. 26 is a block diagram for explaining an exemplary configuration of an information processing device (computer) 300 which can implement a monitoring device according to an exemplary example embodiment of the present invention. That is, Fig. 26 illustrates the configuration of a computer (information processing device) such as a server, that is, a hardware environment which can implement each function in the above-described example embodiments. The computer can implement a monitoring device including all or some of the monitoring device 1 (Fig. 1), the monitoring device 10 (Fig. 2), the monitoring device 21 (Fig. 5), and the monitoring device 41 (Fig. 17).

The information processing device 300 illustrated in Fig. 26 serves as a general computer including the following configurations connected to each other via a bus (communication line) 306:

- a CPU (Central_Processing_Unit) 301
- a ROM (Read_Only_Memory) 302
- a RAM (Random_Access_Memory) 303
- a hard disk (storage device) 304
- a communication interface (illustrated as Communication I/F (Interface) in Fig. 26) 305 with an external device
- a reader/writer 308 capable of reading and writing data stored on a recording medium 307 such as CD-ROM (Compact_Disc_Read_Only_Memory)

The present invention described by taking the aforementioned example embodiments as examples is achieved by the following procedure. That is, a computer program which can implement the functions illustrated in the block configuration diagrams (Figs. 1, 2, 5, and 17) or the flowcharts (Figs. 6, 9, and 12) referred to in the description of the information processing device 300 illustrated in Fig. 26 is supplied to the information processing device 300. The computer program is then achieved by being read and executed by the CPU 301 of the hardware. The computer program supplied into this device need only be stored in a readable and writable transitory storage memory (RAM 303) or a non-volatile storage device such as the hard disk 304.

In the above-mentioned case, a typical procedure is currently available as a method for supplying the computer program into the hardware. Examples include a method for installing the program in the device via various recording media 307 such as CD-ROM, and a method for externally downloading the program via a communication line such as the Internet. In such cases, the present invention may be construed as being implemented in a code forming the computer program or a recording medium in which the code is stored.

Although the present invention has been described above with reference to example embodiments, the present invention is not limited to the above-described example embodiments. Various changes which would be understood by those skilled in the art may be made to the configurations of the present invention within the scope of the present claims.

This application claims priority based on Japanese Patent Application No. 2014-179042 filed on September 3, 2014.

### [Industrial Applicability]

The present invention is not limited to each of the above-described example embodiments. The present invention is applicable to systems which provide information communication services such as Web services and operational services, and systems such as plants and power generation facilities. The present invention is also applicable to power management systems such as HEMS (Home Energy Management System) and BEMS (Building Energy Management System).

### [Reference signs List]

1 monitoring device
2 first model generation unit
3 first determination unit
4 model information
10 monitoring device
11 selection unit
20 monitoring system
21 monitoring device
22 system to be monitored
23 collection unit
24 first division unit
25 second model generation unit
26 correlation analysis unit
27 second determination unit
28 failure analysis unit
29 performance information
30 analysis setting information
40 monitoring system
41 monitoring device
42 second division unit
43 model determination unit
300 information processing device
301 CPU
302 ROM
303 RAM
304 hard disk
305 communication interface
306 bus
307 recording medium
308 reader/writer

## Claims

1. A computer-implemented monitoring device (1, 10) comprising:
model generation means (2) for dividing time-series information from among pieces of time-series information obtained by associating pieces of information of a plurality of items related to a plant or facility to be monitored on a time-series basis over a predetermined period, the time-series information associated with each item to be modeled, into pieces of divided information of periods, each period shorter than the predetermined period, and generating models representing correlations related to the pieces of divided information; and
determination means (3) for, by applying another time-series information obtained by associating the pieces of information of the plurality of items on a time-series basis during a period different from the predetermined period, to at least two or more of the models related to the each item, for each of the two or more of the models, determining whether the correlation represented by at least one or more of the models is maintained, and performing a determination related to the each item based on results of the determining,
wherein the model generation means (2) is configured to divide the time-series information associated with the each item, on the basis of a plurality of division conditions, and to generate the models related to the pieces of divided time-series information, **characterised in that** the model generation means (2) is configured to: obtain a total amount of change in parameters between the generated models related to pieces of divided time-series information , combine the pieces of divided time-series information, for which the obtained total amount of change in parameters satisfies a predetermined condition, and regenerate models related to the combined pieces of divided time-series information.

2. The monitoring device (1, 10) according to claim 1, wherein
the model generation means (2) is configured to divide the time-series information associated with the each item, in response to a change in state related to the each item.

3. The monitoring device (1, 10) according to claim 1, wherein
the model generation means (2) is configured to divide the time-series information associated with the each item, in response to a change in state related to the plant or facility to be monitored.

4. The monitoring device (1, 10) according to claim 1, wherein
the model generation means (2) is configured to divide the time-series information associated with the each item, on the basis of a predetermined number.

5. The monitoring device (1) according to claim 1, wherein
the determination means (3) is configured to determine an anomaly for the each item by determining whether a smallest one of first prediction errors for the time-series information of the plurality of items during the different period satisfies a range defined by a predetermined error threshold, for a correlation function represented by the at least one or more of the models.

6. The monitoring device (1, 10) according to claim 1, wherein
the determination means (3) is configured to determine an anomaly for the each item by determining whether all of first prediction errors for the time-series information of the plurality of items during the different period satisfy a range defined by a predetermined error threshold, for a correlation function represented by the at least one or more of the models.

7. The monitoring device (1, 10) according to claim 1, wherein
as the determination related to the each item, the determination means (3) is configured to select a smallest one of first prediction errors for the time-series information of the plurality of items during the different period, for a correlation function represented by the at least one or more of the models.

8. The monitoring device (1, 10) according to any one of claims 1 to 7, further comprising:
selection means (11) for selecting time-series information associated with the specific each item, for which weight information representing a weight, preferably a reliability or a accuracy or a significance, for the models generated by the model generation means (2) satisfies a first condition, of the time-series information associated with the each item, and the models related to the each item,
wherein the determination means (3) is configured to apply the time-series information of the plurality of items during the different period to the models related to the specific each item selected by the selection means to determine whether the correlations represented by the at least one or more selected model is maintained, and to perform determination related to the each item based on results of the former determination.

9. The monitoring device (1, 10) according to any one of claims 1 to 8, further comprising:
model determination means (3) for determining whether the at least one or more of the models matches a state related to the each item, and, upon determining that the at least one or more of the models does not match the state, providing information representing a division condition for the time-series information associated with the each item to the models generation means and issuing a request to regenerate the model related to time-series information generated in accordance with the division condition,
wherein the model generation means (2) is configured to generate newly divided time-series information on the basis of at least one or more the pieces of the divided time-series information used to generate the models determined not to match, in accordance with the division condition obtained from the model determination means (3).

10. The monitoring device (1, 10) according to claim 9, wherein
the model determination means (3) is configured to determine whether a difference between parameters included in the at least one or more of the models, which is obtained on the basis of the parameters, satisfies a second condition, and, upon determining that the difference does not satisfy the second condition, to determine that the model for which the difference is obtained does not match the state related to the each item, and to provide information representing the division condition for issuing an instruction to combine the at least one or more the pieces of divided time-series information used to generate the models determined not to match.

11. The monitoring device (1, 10) according to claim 9, wherein
when the model comprises at least two or more of the models, the model determination means (3) is configured to determine that the at least one or more of the models does not match the state related to the each item, and to provide information representing the division condition for issuing an instruction to combine the at least one or more the pieces of divided time-series information used to generate all of the models for which weight information, preferably a reliability or a accuracy or a significance, related to the models satisfies a third condition.

12. The monitoring device (1, 10) according to any one of claims 1 to 11, wherein the determination means (3) is configured to present the time-series information and a division boundary in the time-series information divided by the model generation means, in a mode identifiable for a user.

13. The monitoring device (1, 10) according to any one of claims 1 to 11, wherein the determination means (3) is configured to present in a mode identifiable for a user, the time-series information of the plurality of items during the period different from the predetermined period, and at least one or more of the results of the determination used for the determination related to the each item.

14. A monitoring system (20) comprising:
the monitoring device (1, 10) according to any one of claims 1 to 13; and the plant or facility to be monitored communicably connected to the monitoring device (1, 10) via a communication network,
wherein the plant or facility to be monitored is configured to obtain pieces of information concerning the plurality of items for each predetermined time interval, and the monitoring device (1, 10, 21, 41) is configured to perform determination related to the plant or facility to be monitored based on the time-series information obtained by associating the pieces of information concerning the plurality of items related to the plant or facility to be monitored over a predetermined period.

15. A computer-implemented monitoring method comprising:
dividing time-series information from among pieces of time-series information obtained by associating pieces of information of a plurality of items related to a plant or facility to be monitored on a time-series basis over a predetermined period, the time-series information associated with each item to be modeled, into pieces of divided information of periods, each period shorter than the predetermined period, and generating models representing correlations related to the pieces of divided information;
by applying another time-series information obtained by associating the pieces of information of the plurality of items on a time-series basis during a period different from the predetermined period, to at least two or more of the models related to the each item, for each of the two or more of the models, determining whether the correlation represented by at least one or more of the models is maintained, and performing a determination related to the each item based on results of the determining,
wherein the method further comprises:
dividing the time-series information associated with the each item, on the basis of a plurality of division conditions,
generating the models related to the pieces of divided time-series information, **characterised by**:
obtaining a total amount of change in parameters between the generated models related to pieces of divided time-series information,
combining the pieces of divided time-series information, for which the obtained total amount of change in parameters satisfies a predetermined condition, and
regenerating models related to the combined pieces of divided time-series information.

16. A recording medium in which a computer program is stored, the program causing a computer to implement the functions of:
dividing time-series information from among pieces of time-series information obtained by associating pieces of information of a plurality of items related to a plant or facility to be monitored on a time-series basis over a predetermined period, the time-series information associated with each item to be modeled, into pieces of divided information of periods, each period shorter than the predetermined period, and generating models representing correlations related to the pieces of divided information; and
by applying another time-series information obtained by associating the pieces of information of the plurality of items on a time-series basis during a period different from the predetermined period, to at least two or more of the models related to the each item, for each of the two or more of the models, determining whether the correlation represented by at least one or more of the models is maintained, and performing a determination related to the each item based on results of the determining,
wherein further comprising:
dividing the time-series information associated with the each item, on the basis of a plurality of division conditions,
generating the models related to the pieces of divided time-series information, **characterised by**: obtaining a total amount of change in parameters between the generated models related to pieces of divided time-series information,
combining the pieces of divided time-series information, for which the obtained total amount of change in parameters satisfies a predetermined condition, and
regenerating models related to the combined pieces of divided time-series information.

## Patentansprüche

1. Computerimplementierte Überwachungsvorrichtung (1, 10), mit:
einer Modellerzeugungseinrichtung (2) zum Teilen von Zeitserieninformation von Zeitserieninformationsstücken, die durch Zuordnen von Informationsstücken einer Vielzahl von Elementen erhalten werden, die mit einer zu überwachenden Anlage oder Einrichtung in Beziehung stehen, die auf einer Zeitserienbasis über eine vorbestimmte Zeitdauer überwacht werden soll, wobei die Zeitserieninformation jedem zu modellierenden Element zugeordnet ist, in geteilte Informationsstücke von Zeitdauern, wobei jede Zeitdauer kürzer ist als die vorbestimmte Zeitdauer, und zum Erzeugen von Modellen, die Korrelationen darstellen, die mit den geteilten Informationsstücken in Beziehung stehen; und
einer Bestimmungseinrichtung (3) zum Bestimmen, ob die Korrelation, die durch mindestens eines oder mehrere der Modelle dargestellt wird, aufrechterhalten wird, und Ausführen einer Bestimmung, die mit dem jeweiligen Element in Beziehung steht, basierend auf Ergebnissen der Bestimmung, durch Anwenden von anderer Zeitserieninformation, die durch Zuordnen der Informationsstücke der Vielzahl von Elementen auf einer Zeitserienbasis während einer Zeitdauer, die sich von der vorbestimmten Zeitdauer unterscheidet, auf mindestens zwei oder mehr der Modelle erhalten wird, die mit jedem Element in Beziehung stehen, für jedes der zwei oder mehr der Modelle,
wobei die Modellerzeugungseinrichtung (2) dafür konfiguriert ist, die Zeitserieninformation, die jedem Element zugeordnet ist, auf der Basis einer Vielzahl von Teilungsbedingungen zu teilen und die Modelle zu erzeugen, die mit den geteilten Zeitserieninformationsstücken in Beziehung stehen,
**dadurch gekennzeichnet, dass**
die Modellerzeugungseinrichtung (2) dafür konfiguriert ist:
ein Gesamtänderungsmaß von Parametern zwischen den erzeugten Modellen zu erhalten, die mit geteilten Zeitserieninformationsstücken in Beziehung stehen;
die geteilten Zeitserieninformationsstücke, für die das erhaltene Gesamtänderungsmaß der Parameter eine vorbestimmte Bedingung erfüllt, zu kombinieren; und
Modelle zu regenerieren, die mit den kombinierten geteilten Zeitserieninformationsstücken in Beziehung stehen.

2. Überwachungsvorrichtung (1, 10) nach Anspruch 1, wobei
die Modellerzeugungseinrichtung (2) dafür konfiguriert ist, die Zeitserieninformation, die jedem Element zugeordnet ist, in Antwort auf eine Zustandsänderung, die mit jedem Element in Beziehung steht, zu teilen.

3. Überwachungsvorrichtung (1, 10) nach Anspruch 1, wobei
die Modellerzeugungseinrichtung (2) dafür konfiguriert ist, die Zeitserieninformation, die jedem Element zugeordnet ist, in Antwort auf eine Zustandsänderung zu teilen, die mit der zu überwachenden Anlage oder Einrichtung in Beziehung steht.

4. Überwachungsvorrichtung (1, 10) nach Anspruch 1, wobei
die Modellerzeugungseinrichtung (2) dafür konfiguriert ist, die Zeitserieninformation, die jedem Element zugeordnet ist, auf der Basis einer vorgegebenen Zahl zu teilen.

5. Überwachungsvorrichtung (1) nach Anspruch 1, wobei die Bestimmungseinrichtung (3) dafür konfiguriert ist, eine Anomalie für jedes Element zu bestimmen durch Bestimmen, ob ein kleinster von ersten Vorhersagefehlern für die Zeitserieninformation der mehreren Elemente während der verschiedenen Zeitdauer einen Bereich, der durch einen vorgegebenen Fehlerschwellenwert definiert ist, für eine Korrelationsfunktion erfüllt, die durch das mindestens eine oder die mehreren Modelle dargestellt wird.

6. Überwachungsvorrichtung (1, 10) nach Anspruch 1, wobei
die Bestimmungseinrichtung (3) dafür konfiguriert ist, eine Anomalie für jedes Element zu bestimmen durch Bestimmen, ob alle ersten Vorhersagefehler für die Zeitserieninformation der mehreren Elemente während der verschiedenen Zeitdauer einen Bereich, der durch einen vorgegebenen Fehlerschwellenwert definiert ist, für eine Korrelationsfunktion erfüllt, die durch das mindestens eine oder die mehreren Modelle dargestellt wird.

7. Überwachungsvorrichtung (1, 10) nach Anspruch 1, wobei
die Bestimmungseinrichtung (3) dafür konfiguriert ist, als die Bestimmung, die mit jedem Element in Beziehung steht, einen kleinsten von ersten Vorhersagefehlern für die Zeitserieninformation der Vielzahl von Elementen während der verschiedenen Zeitdauer für eine Korrelationsfunktion auszuwählen, die durch das mindestens eine oder die mehreren der Modelle dargestellt wird.

8. Überwachungsvorrichtung (1, 10) nach einem der Ansprüche 1 bis 7, ferner mit:
einer Auswahleinrichtung (11) zum Auswählen von Zeitserieninformation, die dem jeweiligen spezifischen Element zugeordnet ist, für das Gewichtungsinformation, die eine Gewichtung, vorzugsweise eine Zuverlässigkeit oder eine Genauigkeit oder eine Signifikanz, für die durch die Modellerzeugungseinrichtung (2) erzeugten Modelle darstellt, eine erste Bedingung erfüllt, unter der dem jeweiligen Element zugeordneten Zeitserieninformation, und der jedem Element zugeordneten Modelle,
wobei die Bestimmungseinrichtung (3) dafür konfiguriert ist, die Zeitserieninformation der Vielzahl von Elementen während der verschiedenen Zeitdauer auf die dem spezifischen jeweiligen Element zugeordneten Modelle anzuwenden, die durch die Auswahleinrichtung ausgewählt wurden, um zu bestimmen, ob die Korrelationen, die durch das mindestens eine oder die mehreren ausgewählten Modelle dargestellt werden, aufrechterhalten werden, und eine Bestimmung, die mit jedem Element in Beziehung steht, basierend auf den Ergebnissen der erstgenannten Bestimmung auszuführen.

9. Überwachungsvorrichtung (1, 10) nach einem der Ansprüche 1 bis 8, ferner mit:
einer Modellbestimmungseinrichtung (3) zum Bestimmen, ob das mindestens eine oder die mehreren Modelle mit einem Zustand übereinstimmen, der mit jedem Element in Beziehung steht, und, wenn bestimmt wird, dass das mindestens eine oder die mehreren Modelle nicht mit dem Zustand übereinstimmen, Bereitstellen von Information, die eine Teilungsbedingung für die Zeitserieninformation darstellt, die jedem Element zugeordnet ist, für die Modellerzeugungseinrichtung und Ausgeben einer Anforderung zum Regenerieren des Modells, das mit der Zeitserieninformation in Beziehung steht, die gemäß der Teilungsbedingung erzeugt wird,
wobei die Modellerzeugungseinrichtung (2) dafür konfiguriert ist, neu geteilte Zeitserieninformation basierend auf mindestens einem oder mehreren der geteilten Zeitserieninformationsstücke, die zum Erzeugen der Modelle verwendet werden, für die bestimmt wurde, dass sie nicht übereinstimmen, gemäß der von der Modellbestimmungseinrichtung (3) erhaltenen Teilungsbedingung zu erzeugen.

10. Überwachungsvorrichtung (1, 10) nach Anspruch 9, wobei
die Modellbestimmungseinrichtung (3) dafür konfiguriert ist, zu bestimmen, ob eine Differenz zwischen Parametern, die in dem mindestens einen oder in den mehreren der Modelle enthalten sind, die basierend auf den Parametern erhalten werden, eine zweite Bedingung erfüllt, und, wenn bestimmt wird, dass die Differenz die zweite Bedingung nicht erfüllt, zu bestimmen, dass das Modell, für das die Differenz erhalten wird, nicht mit dem Zustand übereinstimmt, der mit jedem Element in Beziehung steht, und Information, die die Teilungsbedingung darstellt, für die Ausgabe einer Anweisung zum Kombinieren der mindestens einen oder mehreren der geteilten Zeitserieninformationsstücke bereitzustellen, die zum Erzeugen der Modelle verwendet werden, für die bestimmt wird, dass sie nicht übereinstimmen.

11. Überwachungsvorrichtung (1, 10) nach Anspruch 9, wobei,
wenn das Modell mindestens zwei oder mehr der Modelle umfasst, die Modellbestimmungseinrichtung (3) dafür konfiguriert ist, zu bestimmen, dass das mindestens eine oder die mehreren der Modelle nicht mit dem Zustand übereinstimmen, der mit dem jeweiligen Element in Beziehung steht, und Information, die die Teilungsbedingung darstellt, für die Ausgabe einer Anweisung zum Kombinieren der mindestens einen oder der mehreren der geteilten Zeitserieninformationsstücke bereitzustellen, die verwendet werden, um alle die Modelle zu erzeugen, für die Gewichtungsinformation, vorzugsweise eine Zuverlässigkeit oder eine Genauigkeit oder eine Signifikanz, die mit den Modellen in Beziehung stehen, eine dritte Bedingung erfüllt.

12. Überwachungsvorrichtung (1, 10) nach einem der Ansprüche 1 bis 11, wobei
die Bestimmungseinrichtung (3) dafür konfiguriert ist, die Zeitserieninformation und eine Teilungsgrenze in der Zeitserieninformation, die durch die Modellerzeugungseinrichtung geteilt wird, in einem für einen Benutzer erkennbaren Modus darzustellen.

13. Überwachungsvorrichtung (1, 10) nach einem der Ansprüche 1 bis 11, wobei
die Bestimmungseinrichtung (3) dafür konfiguriert ist, in einem für einen Benutzer erkennbaren Modus die Zeitserieninformation der mehreren Elemente während der Zeitdauer, die von der vorbestimmten Zeitdauer verschieden ist, und mindestens eines oder mehrere der Ergebnisse der Bestimmung, die für die Bestimmung verwendet werden, die mit dem jeweiligen Element in Beziehung steht, darzustellen.

14. Überwachungssystem (20) mit:
der Überwachungsvorrichtung (1, 10) nach einem der Ansprüche 1 bis 13; und
der zu überwachenden Anlage oder Einrichtung, die mit der Überwachungsvorrichtung (1, 10) über ein Kommunikationsnetz kommunizierbar verbunden ist,
wobei die zu überwachende Anlage oder Einrichtung dafür konfiguriert ist, für jedes vorbestimmte Zeitintervall Informationsstücke zu erhalten, die mit den mehreren Elementen in Beziehung stehen, und
wobei die Überwachungsvorrichtung (1, 10, 21, 41) dafür konfiguriert ist, eine Bestimmung, die mit der zu überwachenden Anlage oder Einrichtung in Beziehung steht, basierend auf der Zeitserieninformation auszuführen, die durch Zuordnen der Informationsstücke, die mit den mehreren Elementen in Beziehung stehen, die mit der zu überwachenden Anlage oder Einrichtung in Beziehung stehen, über eine vorbestimmte Zeitdauer erhalten wird.

15. Computerimplementiertes Überwachungsverfahren, mit den Schritten:
Teilen von Zeitserieninformation unter Zeitserieninformationsstücken, die durch Zuordnen von Informationsstücken zu einer Vielzahl von Elementen erhalten werden, die mit einer Anlage oder Einrichtung in Beziehung stehen, die auf einer Zeitserienbasis über eine vorbestimmte Zeitdauer überwacht werden soll, wobei die Zeitserieninformation jedem zu modellierenden Element zugeordnet sind, in geteilte Informationsstücke von Zeitdauern, wobei jede Zeitdauer kürzer ist als die vorbestimmte Zeitdauer, und Erzeugen von Modellen, die Korrelationen darstellen, die mit den geteilten Informationsstücken in Beziehung stehen;
durch Anwenden einer anderen Zeitserieninformation, die durch Zuordnen der Informationsstücke der Vielzahl von Elementen auf einer Zeitserienbasis während einer von der vorbestimmten Zeitdauer verschiedenen Zeitdauer erhalten wird, auf mindestens zwei oder mehr der Modelle, die mit jedem Element in Beziehung stehen, für jedes der zwei oder mehr der Modelle, Bestimmen, ob die Korrelation, die durch mindestens eines oder mehrere der Modelle dargestellt wird, aufrechterhalten wird, und Ausführen einer Bestimmung, die mit jedem Element in Beziehung steht, basierend auf den Ergebnissen der Bestimmung,
wobei das Verfahren ferner die Schritte aufweist:
Teilen der Zeitserieninformation, die jedem Element zugeordnet ist, auf der Basis einer Vielzahl von Teilungsbedingungen;
Erzeugen der Modelle, die mit den geteilten Zeitserieninformationsstücken in Beziehung steht,
**gekennzeichnet durch**:
Erhalten eines Gesamtänderungsmaßes von Parametern zwischen den erzeugten Modellen, die mit geteilten Zeitserieninformationsstücken in Beziehung stehen,
Kombinieren der geteilten Zeitserieninformationsstücke, für die das erhaltene Gesamtänderungsmaß von Parametern eine vorbestimmte Bedingung erfüllt; und
Regenerieren von Modellen, die mit den kombinierten geteilten Zeitserieninformationsstücken in Beziehung stehen.

16. Aufzeichnungsmedium, in dem ein Computerprogramm gespeichert ist, wobei das Programm einen Computer veranlasst, die folgenden Funktionen zu implementieren:
Teilen von Zeitserieninformation unter Zeitserieninformationsstücken, die durch Zuordnen von Informationsstücken einer Vielzahl von Elementen erhalten werden, die mit einer Anlage oder Einrichtung in Beziehung stehen, die auf einer Zeitserienbasis über eine vorbestimmte Zeitdauer überwacht werden soll, wobei die Zeitserieninformation jedem zu modellierenden Element zugeordnet ist, in geteilte Informationsstücke von Zeitdauern, wobei jede Zeitdauer kürzer ist als die vorbestimmte Zeitdauer, und Erzeugen von Modellen, die Korrelationen darstellen, die mit den geteilten Informationsstücken in Beziehung stehen;
durch Anwenden einer anderen Zeitserieninformation, die durch Zuordnen der Informationsstücke der Vielzahl von Elementen auf einer Zeitserienbasis während einer von der vorbestimmten Zeitdauer verschiedenen Zeitdauer erhalten wird, auf mindestens zwei oder mehr der Modelle, die mit jedem Element in Beziehung stehen, für jedes der zwei oder mehr der Modelle, Bestimmen, ob die Korrelation, die durch mindestens eines oder mehrere der Modelle dargestellt wird, beibehalten wird, und Ausführen einer Bestimmung, die mit jedem Element in Beziehung steht, basierend auf den Ergebnissen der Bestimmung,
ferner mit:
Teilen der Zeitserieninformation, die jedem Element zugeordnet ist, auf der Basis einer Vielzahl von Teilungsbedingungen;
Erzeugen der Modelle, die mit den geteilten Zeitserieninformationsstücken in Beziehung steht,
**gekennzeichnet durch**:
Erhalten eines Gesamtänderungsmaßes von Parametern zwischen den erzeugten Modellen, die mit geteilten Zeitserieninformationsstücken in Beziehung stehen,
Kombinieren der geteilten Zeitserieninformationsstücke, für die das erhaltene Gesamtänderungsmaß von Parametern eine vorbestimmte Bedingung erfüllt; und
Regenerieren von Modellen, die mit den kombinierten geteilten Zeitserieninformationsstücken in Beziehung stehen.

## Revendications

1. Dispositif de surveillance (1, 10) mis en œuvre par ordinateur comprenant :
un moyen de génération de modèles (2) pour diviser des informations chronologiques parmi des fragments d'informations chronologiques obtenues en associant des fragments d'informations d'une pluralité d'éléments liés à une usine ou une installation devant être surveillée sur une base chronologique pendant une période prédéterminée, les informations chronologiques étant associées à chaque élément devant être modélisé, en fragments d'informations divisées de périodes, chaque période étant plus courte que la période prédéterminée, et générer des modèles représentant des corrélations liées aux fragments d'informations divisées ; et
un moyen de détermination (3) pour, en appliquant d'autres informations chronologiques obtenues en associant les fragments d'informations de la pluralité d'éléments sur une base chronologique durant une période différente de la période prédéterminée, à au moins deux ou plus des modèles liés à chaque élément, pour chacun des deux modèles ou plus, déterminer si la corrélation représentée par au moins un ou plusieurs des modèles est maintenue, et réaliser une détermination liée à chaque élément sur la base de résultats de la détermination,
dans lequel le moyen de génération de modèles (2) est configuré pour diviser les informations chronologiques associées à chaque élément, sur la base d'une pluralité de conditions de division, et pour générer les modèles liés aux fragments d'informations chronologiques divisées,
**caractérisé en ce que** le moyen de génération de modèles (2) est configuré pour :
obtenir une quantité totale de changement de paramètres entre les modèles générés liés à des fragments d'informations chronologiques divisées,
combiner les fragments d'informations chronologiques divisées pour lesquelles la quantité totale obtenue de changement de paramètres est conforme à une condition prédéterminée, et
générer à nouveau des modèles liés aux fragments combinés d'informations chronologiques divisées.

2. Dispositif de surveillance (1, 10) selon la revendication 1, dans lequel
le moyen de génération de modèles (2) est configuré pour diviser les informations chronologiques associées à chaque élément, en réponse à un changement d'un état lié à chaque élément.

3. Dispositif de surveillance (1, 10) selon la revendication 1, dans lequel
le moyen de génération de modèles (2) est configuré pour diviser les informations chronologiques associées à chaque élément, en réponse à un changement d'un état lié à l'usine ou l'installation devant être surveillée.

4. Dispositif de surveillance (1, 10) selon la revendication 1, dans lequel
le moyen de génération de modèles (2) est configuré pour diviser les informations chronologiques associées à chaque élément, sur la base d'un nombre prédéterminé.

5. Dispositif de surveillance (1, 10) selon la revendication 1, dans lequel
le moyen de détermination (3) est configuré pour déterminer une anomalie pour chaque élément en déterminant si une plus petite parmi des premières erreurs de prédiction pour les informations chronologiques de la pluralité d'éléments durant la période différente est conforme à une plage définie par un seuil d'erreur prédéterminé, pour une fonction de corrélation représentée par les au moins un ou plusieurs des modèles.

6. Dispositif de surveillance (1, 10) selon la revendication 1, dans lequel
le moyen de détermination (3) est configuré pour déterminer une anomalie pour chaque élément en déterminant si toutes les premières erreurs de prédiction pour les informations chronologiques de la pluralité d'éléments durant la période différente sont conformes à une plage définie par un seuil d'erreur prédéterminé, pour une fonction de corrélation représentée par les au moins un ou plusieurs des modèles.

7. Dispositif de surveillance (1, 10) selon la revendication 1, dans lequel en tant que détermination liée à chaque élément, le moyen de détermination (3) est configuré pour sélectionner une plus petite parmi des premières erreurs de prédiction pour les informations chronologiques de la pluralité d'éléments durant la période différente, pour une fonction de corrélation représentée par les au moins un ou plusieurs des modèles.

8. Dispositif de surveillance (1, 10) selon l'une quelconque des revendications 1 à 7, comprenant en outre :
des moyens de sélection (11) pour sélectionner des informations chronologiques associées à chaque élément spécifique, pour lequel des informations de poids représentant un poids, de préférence une fiabilité ou une précision ou une importance, pour les modèles générés par le moyen de génération de modèles (2) sont conformes à une première condition, parmi les informations chronologiques associées à chaque élément, et les modèles liés à chaque élément,
dans lequel le moyen de détermination (3) est configuré pour appliquer les informations chronologiques de la pluralité d'éléments durant la période différente aux modèles liés à chaque élément spécifique sélectionné par le moyen de sélection pour déterminer si la corrélation représentée par les au moins un ou plusieurs modèles sélectionnés est maintenue, et pour réaliser une détermination liée à chaque élément sur la base de résultats de la détermination précédente.

9. Dispositif de surveillance (1, 10) selon l'une quelconque des revendications 1 à 8, comprenant en outre :
un moyen de détermination (3) de modèles pour déterminersi les au moins un ou plusieurs des modèles correspondent à un état lié à chaque élément, et, lorsqu'il est déterminé que les au moins un ou plusieurs des modèles ne correspondent pas à l'état, fournir des informations représentant une condition de division pour les informations chronologiques associées à chaque élément au moyen de génération de modèles et émettre une demande pour générer à nouveau le modèle lié à des informations chronologiques générées conformément à la condition de division,
dans lequel le moyen de génération de modèles (2) est configuré pour générer des informations chronologiques nouvellement divisées sur la base d'au moins un ou plusieurs des fragments des informations chronologiques divisées utilisées pour générer les modèles déterminés comme ne correspondant pas, conformément à la condition de division obtenue à partir du moyen de détermination (3) de modèles.

10. Dispositif de surveillance (1, 10) selon la revendication 9, dans lequel le moyen de détermination (3) de modèles est configuré pour déterminer si une différence entre des paramètres compris dans les au moins un ou plusieurs des modèles, qui est obtenue sur la base des paramètres, est conforme à une deuxième condition, et, lorsqu'il est déterminé que la différence n'est pas conforme à la deuxième condition, pour déterminer que le modèle pour lequel la différence est obtenue ne correspond pas à l'état lié à chaque élément, et pour fournir des informations représentant la condition de division pour émettre une instruction pour combiner les au moins un ou plusieurs fragments d'informations chronologiques divisées utilisées pour générer les modèles déterminés comme ne correspondant pas.

11. Dispositif de surveillance (1, 10) selon la revendication 9, dans lequel lorsque le modèle comprend au moins deux des modèles ou plus, le moyen de détermination (3) de modèles est configuré pour déterminer que les au moins un ou plusieurs des modèles ne correspondent pas à l'état lié à chaque élément, et pour fournir des informations représentant la condition de division pour émettre une instruction pour combiner les au moins un ou plusieurs des fragments d'informations chronologiques divisées utilisées pour générer tous les modèles pour lesquels des informations de poids, de préférence une fiabilité ou une précision ou une importance, liées aux modèles sont conformes à une troisième condition.

12. Dispositif de surveillance (1, 10) selon l'une quelconque des revendications 1 à 11, dans lequel
le moyen de détermination (3) est configuré pour présenter les informations chronologiques et une limite de division dans les informations chronologiques divisées par le moyen de génération de modèles, dans un mode identifiable pour un utilisateur.

13. Dispositif de surveillance (1, 10) selon l'une quelconque des revendications 1 à 11, dans lequel
le moyen de détermination (3) est configuré pour présenter dans un mode identifiable pour un utilisateur les informations chronologiques de la pluralité d'éléments durant la période différente de la période prédéterminée, et au moins un ou plusieurs des résultats de la détermination utilisés pour la détermination liée à chaque élément.

14. Système de surveillance (20) comprenant :
le dispositif de surveillance (1, 10) selon l'une quelconque des revendications 1 à 13 ; et l'usine ou l'installation devant être surveillée connectée de manière communicante au dispositif de surveillance (1, 10) via un réseau de communication,
dans lequel l'usine ou l'installation devant être surveillée est configurée pour obtenir des fragments d'informations concernant la pluralité d'éléments pour chaque intervalle de temps prédéterminé, et
le dispositif de surveillance (1, 10, 21, 41) est configuré pour réaliser une détermination liée à l'usine ou l'installation devant être surveillée sur la base des informations chronologiques obtenues en associant les fragments d'informations concernant la pluralité d'éléments liés à l'usine ou l'installation devant être surveillée pendant une période prédéterminée.

15. Procédé de surveillance mis en œuvre par ordinateur comprenant :
la division d'informations chronologiques parmi des fragments d'informations chronologiques obtenues en associant des fragments d'informations d'une pluralité d'éléments liés à une usine ou une installation devant être surveillée sur une base chronologique pendant une période prédéterminée, les informations chronologiques étant associées à chaque élément devant être modélisé, en fragments d'informations divisées de périodes, chaque période étant plus courte que la période prédéterminée, et la génération de modèles représentant des corrélations liées aux fragments d'informations divisées ;
en appliquant d'autres informations chronologiques obtenues en associant les fragments d'informations de la pluralité d'éléments sur une base chronologique durant une période différente de la période prédéterminée, à au moins deux ou plus des modèles liés à chaque élément, pour chacun des deux modèles ou plus, le fait de déterminer si la corrélation représentée par au moins un ou plusieurs des modèles est maintenue, et la réalisation d'une détermination liée à chaque élément sur la base de résultats de la détermination,
dans lequel le procédé comprend en outre :
la division des informations chronologiques associées à chaque élément, sur la base d'une pluralité de conditions de division,
la génération des modèles liés aux fragments d'informations chronologiques divisées,
**caractérisé par** :
l'obtention d'une quantité totale de changement de paramètres entre les modèles générés liés à des fragments d'informations chronologiques divisées,
la combinaison des fragments d'informations chronologiques divisées, pour lesquelles la quantité totale obtenue de changement de paramètres est conforme à une condition prédéterminée, et
la génération à nouveau de modèles liés aux fragments combinés d'informations chronologiques divisées.

16. Support d'enregistrement dans lequel un programme d'ordinateur est stocké, le programme amenant un ordinateur à mettre en œuvre les fonctions consistant à :
diviser des informations chronologiques parmi des fragments d'informations chronologiques obtenues en associant des fragments d'informations d'une pluralité d'éléments liés à une usine ou une installation devant être surveillée sur une base chronologique pendant une période prédéterminée, les informations chronologiques étant associées à chaque élément devant être modélisé, en fragments d'informations divisées de périodes, chaque période étant plus courte que la période prédéterminée, et générer des modèles représentant des corrélations liées aux fragments d'informations divisées ; et
en appliquant d'autres informations chronologiques obtenues en associant les fragments d'informations de la pluralité d'éléments sur une base chronologique durant une période différente de la période prédéterminée, à au moins deux ou plus des modèles liés à chaque élément, pour chacun des deux modèles ou plus, déterminer si la corrélation représentée par au moins un ou plusieurs des modèles est maintenue, et réaliser une détermination liée à chaque élément sur la base de résultats de la détermination,
dans lequel comprenant en outre :
la division des informations chronologiques associées à chaque élément, sur la base d'une pluralité de conditions de division,
la génération des modèles liés aux fragments d'informations chronologiques divisées,
**caractérisé par** :
l'obtention d'une quantité totale de changement de paramètres entre les modèles générés liés à des fragments d'informations chronologiques divisées,
la combinaison des fragments d'informations chronologiques divisées, pour lesquelles la quantité totale obtenue de changement de paramètres est conforme à une condition prédéterminée, et
la génération à nouveau de modèles liés aux fragments combinés d'informations chronologiques divisées.
